(19) Europäisches Patentamt
European Patent Office
Office européen des brevets

(11) Veröffentlichungsnummer: **0 348 705**
**A2**

(12) **EUROPÄISCHE PATENTANMELDUNG**

(21) Anmeldenummer: **89110373.1**

(51) Int. Cl.4: **C07F 7/08 , C08G 77/02**

(22) Anmeldetag: **08.06.89**

(30) Priorität: **29.06.88 DD 317319**
**29.06.88 DD 317320**
**29.06.88 DD 317321**

(43) Veröffentlichungstag der Anmeldung:
**03.01.90 Patentblatt 90/01**

(84) Benannte Vertragsstaaten:
**AT BE CH DE FR GB IT LI LU NL SE**

(71) Anmelder: **Akademie der Wissenschaften der DDR**
**Otto-Nuschke-Strasse 22/23**
**DDR-1086 Berlin(DD)**

(72) Erfinder: **Hoebbel, Dagobert, Dipl.-Chem.**
**Vereinsstrasse 30**
**DDR-1197 Berlin(DD)**
Erfinder: **Pitsch, Irene, Dipl.-Chem.**
**Selchowstrasse 8 b**
**DDR-1199 Berlin(DD)**
Erfinder: **Hiller, Wolf, Dipl.-Chem.**
**Wörlitzer Strasse 39**
**DDR-1143 Berlin(DD)**
Erfinder: **Dathe, Sigrid, Dipl.-Chem.**
**Caspar-David-Friedrich-Strasse 9b**
**DDR-8020 Dresden(DD)**
Erfinder: **Popowski, Eckhard, Dipl.-Chem.**
**Erna-Wilken-Strasse 4**
**DDR-2520 Rostock(DD)**
Erfinder: **Sonnek, Georg, Dipl.-Chem.**
**Ottomar-Geschke-Strasse 61**
**DDR-1170 Berlin(DD)**
Erfinder: **Reiher, Thomas, Dipl.-Chem.**
**Münsterlandstrasse 35**
**DDR-1134 Berlin(DD)**
Erfinder: **Jancke, Harald, Dipl.-Chem.**
**Frankfurter Allee 130**
**DDR-1130 Berlin(DD)**
Erfinder: **Scheim, Uwe, Dipl.-Chem.**
**Rossmessler Strasse 12**
**DDR-8030 Dresden(DD)**

(74) Vertreter: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

(54) **Organophile Doppelringkieselsäurederivate mit käfigartigen Strukturen, Verfahren zu ihrer Herstellung und ihre Verwendung.**

(57) Die Erfindung betrifft organophile Doppelringkieselsäurederivate mit käfigartigen Strukturen der allgemeinen Formel I

$Si_yO_{2.5\,y}(SiR^1R^2R^3)_n(SiR^1R^2Q)_{y-n}$ (I)

worin y = 6, 8 oder 10; n = null bis (y - 1); $R^1$, $R^2$, $R^3$ = Phenyl, $C_{1-5}$-Alkyl; und Q = H, Oh, Hal, Halogenalkyl, Halogenphenyl, Ethylphenyl, primärer Alkanolrest, $C_{2-20}$-Alkyl, $C_{2-8}$-Alkenyl, Epoxy, Silylalkyl, Siloxanylalkyl, Phenylmethylsilylalkyl, Phenyl, Alkenyl-oder Amin-substituiertes Phenyl, Carbonsäurerest oder Carbonsäurederivatrest bedeutet. Die neuen Verbindungen bilden Polymerisate. Sie können wegen ihrer Festigkeit und Temperatur- und Ätzbeständigkeit als Beschichtungsmittel aber auch als Absorptionsmittel eingesetzt werden. Es werden Herstellungsverfahren beschrieben.

EP 0 348 705 A2

# Organophile Doppelringkieselsäurederivate mit käfigartigen Strukturen, Verfahren zu ihrer Herstellung und ihre Verwendung

Die Erfindung betrifft neue organophile Doppelringkieselsäurederivate mit käfigartigen Strukturen. Durch die käfigartigen Kieselsäureringe in bekannten polymeren oder polymerebildenden Gruppen werden die Eigenschaften dieser insbesondere hinsichtlich der Festigkeit und der Temperatur- und Ätzbeständigkeit verbessert, so daß sich neue Anwendungsgebiete erschließen. Die Erfindung betrifft auch Herstellungsverfahren der neuen Verbindungen und deren Verwendung.

Bekannt sind käfigartige Doppelringkieselsäurederivate mit Trialkylsilylgruppen als Liganden, von denen die Trimethylsilylderivate der Doppeldreiring- (D3R-), Doppelvierring- (D4R-) und Doppelfünfring- (D5R-) Kieselsäure in der Zeitschrift für Anorganische und Allgemeine Chemie (384 (1971) 43; 418 (1975) 35; 424 (1976) 115; 552 (1987) 236) beschrieben sind. Diese Verbindungen werden durch Trimethylsilylierung definierter Tetraalkylammonium-, Tetraalkanolammonium-, Kobalt-, Kupfer- oder Nickelethylendiaminsilicate mit käfigartigen Doppelringsilicatanionen sowie deren basischen wäßrigen Lösungen und sauren wäßrigen bzw. in polaren organischen Lösungsmitteln (Tetrahydrofuran, Alkohole, Ketone) stabilisierten käfigartigen Doppelringkieselsäuren hergestellt. Als Silylierungsmittel dient Trimethylchlorsilan oder Hexamethyldisiloxan sowie Bistrimethylsilylacetamid, die in organischen Lösungsmitteln gelöst sind. Die Trialkylsilierten käfigartigen Doppelringkieselsäurederivate sind in neutralem Medium stabile inerte Verbindungen. Es ist ein Ziel der Erfindung, neue organophile Doppelringkieselsäurederivate bereitzustellen. Außerdem sind Herstellungsverfahren und Verwendungen der neuen Verbindungen Gegenstand der Erfindung.

Es ist ein weiteres Ziel der Erfindung, die Anwendungsgebiete bestimmter organischer Verbindungen bzw. polymerbildender organischer Verbindungen durch Einführung silicatischer Baugruppen in die C-Verbindungen zu erweitern. Ein weiteres Ziel der Erfindung ist, neue reaktionsfähige Zwischenprodukte in Form von Doppelringkieselsäurederivaten bereitzustellen.

Erfindungsgemäß entsprechen die neuen Verbindungen mit käfigartigen Strukturen der allgemeinen Formel I

$Si_yO_{2,5\,y}(SiR^1R^2R^3)_n(SiR^1R^2Q)_{y-n}$ (I)

worin

y die ganze Zahl 6, 8 oder 10 bedeutet;

n eine ganze Zahl von Null bis (y - 1) bedeutet;

$R^1$, $R^2$, und $R^3$ die gleich oder verschieden sein können und jeweils geradkettiges oder verzweigtes Alkyl mit 1 bis 5 Kohlenstoffatomen oder Phenyl darstellen;

Q Wasserstoff; Hydroxy; der Rest eines primären Alkohols; Halogen; Halogenalkyl; Halogenphenyl; Ethylphenyl; ein aliphatischer geradkettiger oder verzweigter $C_2$-bis $C_{20}$- Alkyl- oder $C_2$-bis $C_8$-Alkenylrest, der gegebenenfalls substituiert sein kann; ein Epoxyrest, der über eine Ethergruppe gebunden sein kann; ein Phenylrest, der gegebenenfalls durch Alkenyl oder primäres oder sekundäres Amin substituiert sein kann; ein Silylalkyl- oder Siloxanylalkylrest oder Silylphenylalkylrest; oder ein $C_2$-bis $C_4$-Alkylcyclohexenrest; ein Carbonsäurerest oder ein Rest eines Carbonsäurederivates darstellt.

Wie bereits ausgeführt, sind die neuen Verbindungen durch eine käfigartige Struktur gekennzeichnet, bestehend aus sechs, acht oder zehn $SiO_4$-Tetraedern, an deren terminalen $SiO_4$-Tetraedern über Si-O-Si-Brücken die reaktionsfähigen bzw. weniger reaktionsfähigen $SiR^1R^2Q$-Gruppen gebunden sind, die teilweise durch inerte $SiR^1R^2R^3$-Gruppen ersetzt sein können, entsprechend dem folgenden Beispiel (y = 8; n = 3):

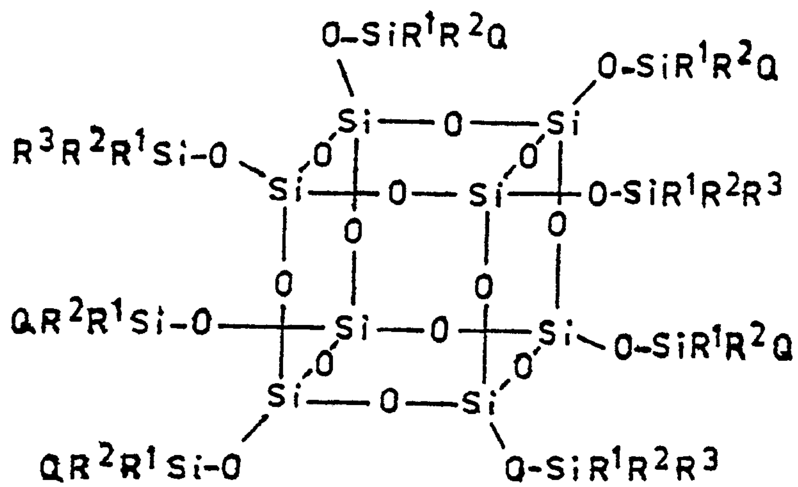

(D4R-)

Derartige käfigartige Kieselsäurederivate werden auch als silylierte Doppelring- (DR-) Kieselsäuren bezeichnet, im oben angeführten Beispiel als silylierte Doppelvierring- (D4R-) Kieselsäuren. Verbindungen mit y = 6 werden dementsprechend als Doppeldreiring- (D3R-) Kieselsäurederivate und mit y = 10 als Doppelfünfring- (D5R-) Kieselsäurederivate bezeichnet, die nachfolgende Konstitutionen aufweisen.

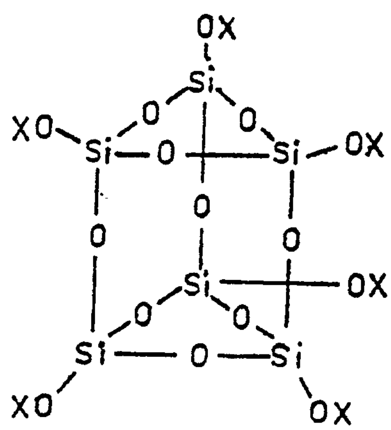

(D3R-)

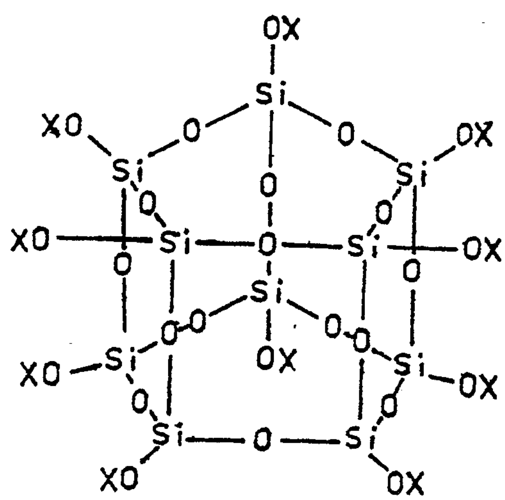

(D5R-)

x = $SiR^1R^2Q$ bzw. teilweise $SiR^1R^2R^3$.

Wie aus der Formal I und dem obigen Beispiel für ein D4R-Kieselsäurestruktur zu entnehmen, kann das Verhältnis von $SiR^1R^2Q$-Gruppen zu $SiR^1R^2R^3$-Gruppen in bestimmten Grenzen schwanken und richtet sich im wesentlichen nach der gewünschten Reaktionsfähigkeit bzw. den Eigenschaften des Endproduktes. Die Zahl n ist bei den erfindungsgemäßen Verbindungen im angegebenen Rahmen bis zu y - 1 frei wählbar; wobei zu berücksichtigen ist, daß n im Ausgangs- und Reaktionsprodukt immer einen statistischen Mittelwert darstellt; wenigstens eine $SiR^1R^2Q$-Gruppe muß jedoch am Doppelringkieselsäuremolekül vorhanden sein. Bevorzugt sind gemischte Verbindungen mit mittleren Zahlen von n = 0 bis 4 bei y = 6; n = 0 bis 6 bei y = 8; und n = 0 bis 8 bei y = 10.

Es können auch Gemische von Verbindungen als Ausgangsprodukte eingesetzt werden, in denen y = 6 und y = 8 und y = 10 ist, so daß die Endprodukte aus wenigstens zwei der Komponenten der Gruppe Doppeldrei-, Doppelvier- und Doppelfünfring-Kieselsäurederivate bestehen können.

Weiterhin können auch Ausgangsprodukte verwendet werden, die neben den käfigartigen Doppelringkieselsäurederivaten Verunreinigungen aus vorhergehenden Verfarhrensstufen bis etwa 5 - 10 % enthalten

können.

$R^1$, $R^2$, $R^3$ können geradkettige oder verzweigte Alkylreste sein mit 1 bis 5 C-Atomen oder Phenyl, sie können gleich oder verschieden sein. Vorzugsweise sind $R^1$, $R^2$ und $R^3$ Methyl, Ethyl, Propyl, Isopropyl und/oder Phenyl, wobei Methyl, Ethyl und/oder Phenyl besonders bevorzugt sind. In einer bevorzugten Ausführungsform ist $R^1$ und $R^2$ Alkyl, vorzugsweise Methyl und $R^3$ ist Phenyl.

Wenn Q ein aliphatischer geradkettiger oder verzweigter $C_2$-$C_{20}$-Alkylrest oder $C_2$-$C_8$-Alkenylrest ist, so kann dies vorzugsweise ein gesättigter geradkettiger Alkylrest mit 2 bis 18 Kohlenstoffatomen sein, z. B. Ethyl, Propyl, Isobutyl, Octyl oder Octadecyl. Ein besonders bevorzugter Alkylrest ist Octyl. Wenn Q ein substituierter Alkylrest ist, so ist dies vorzugsweise ein durch primäres oder sekundäres Amin substituierter Alkylrest.

Q kann aber auch Alkenylrest sein wie Vinyl, Allyl, oder Butenyl, der durch Halogen oder Hydroxy ein- oder mehrfach substituiert sein, beispielsweise ein 1,4-Dihydroxybut(2) enylrest. Besonders bevorzugt sind Vinyl und Allyl.

Bevorzugte Alkenylreste sind auch solche der Formel (VI a)

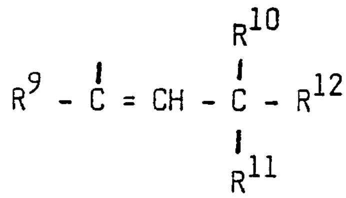

(VI a)

worin $R^9$ Wasserstoff, Alkyl mit 1 bis 7 Kohlenstoffatomen, vorzugsweise $C_1$-$C_3$-Alkyl, insbesondere Methyl; Cyclohexyl; Phenyl; $-CH_2OH$; $-CH_2Hal$, wobei Hal vorzugsweise Chlor ist oder $-CR^{13}R^{14}OH$, worin $R^{13}$ und $R^{14}$ $C_1$-$C_3$-Alkyl, vorzugsweise Methyl, oder Wasserstoff sein können, bedeutet;
$R^{10}$ und $R^{11}$ sind gleich oder verschieden und stellen $C_1$-$C_3$-Alkyl, vorzugsweise Methyl, oder Wasserstoff dar; und $R^{12}$ ist Hal, OH oder $-O(CH_2CH_2O)_nH$, mit der Maßgabe, daß, wenn $R^{12}$ $-O\ (CH_2CH_2O)_nH$ ist dann $R^9$ $-CR^1R^2OH$ bedeutet, wobei n eine ganze Zahl von 1 bis 40 sein kann, vorzugsweise 5 bis 15.

Weitere bevorzugte Alkenylreste sind solche der Formel

$OH - CH_2 - C = CH - CH_2 - O\ (CH_2CH_2O)_{5\ \text{bis}\ 15}\ H.$

Bevorzugt ist weiterhin, daß der Silylalkylrest ein Triethyl- oder Triethoxysilylrest ist und der Siloxanylalkylrest Heptamethyltrisiloxanyl ist oder ein entsprechender Siloxanylrest der allgemeinen Formel (VII a)

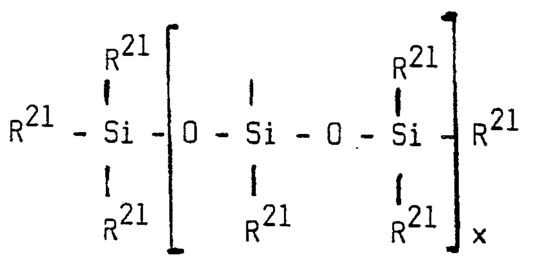

(VII a)

ist, mit x = 2 bis 50 und $R^{21}$ = Methyl und/oder Phenyl.

Wenn Q ein Epoxyrest darstellt, der über eine Ethergruppe gebunden sein kann, so kann dies ein Rest der Formel (VI)

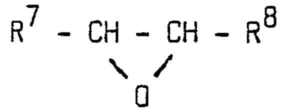

(VI)

sein, worin $R^7$ ein geradkettiger oder verzweigter Alkylrest mit 2 bis 5 Kohlenstoffatomen ist, der gegebenenfalls eine Etherbindung aufweist, und $R^8$ ist Wasserstoff oder ein Alkylrest mit 1 bis 3 Kohlenstoffatomen. Bevorzugter Epoxyrest ist beispielsweise die Glycidoxypropylgruppe

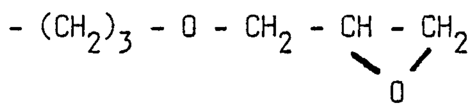

Q kann auch ein durch primäres oder sukundäres Amin substituierter Phenylrest sein, wobei als Substituenten im wesentlichen Mono- oder Dialkylamingruppen vorhanden sind.

Q kann auch ein Carbonsäurerest sein sowie ein Carbonsäureester- oder Amidrest, insbesondere ein Propionsäurerest oder ein iso-Buttersäurerest.

Wenn Q ein Halogenalkylrest ist, so ist dies vorzugsweise ein Chlormethyl-, Brommethyl-, Chlorpropyl- oder Brompropylrest. Das Halogen im Halogenphenylrest ist vorzugsweise Chlor oder Brom.

Die neuen Verbindungen sind durch eine Käfigstruktur der $SiO_4$-Tetraeder, an der organische Liganden über Si-O-Si-Brücken gebunden sind, gekennzeichnet und können je nach Art des Restes Q und Größe von n unterschiedliche Eigenschaften aufweisen. Sie stellen Finalprodukte dar, können aber auch als Zwischenprodukte zur Herstellung von über den Rest Q polymerisierten Verbindungen verwendet werden. Durch das wiederhole Vorhandensein der anorganischen Doppelringkieselsäurestruktur in den organischen Polymerisaten können deren Eigenschaften entscheidend beeinflußt werden.

Verbindungen aus silicatischen und organischen Produkten sind bisher meist aus festen Kieselgelen bzw. silicatischen Mineralien hergestellt worden. Die neuen Verbindungen dagegen lassen sich über Zwischenprodukte aus wäßrigen Silicat- oder Kieselsäurelösungen sowie Organokieselsolen herstellen, wobei man definierte Strukturen erhalten kann. Sie stellen daher eine neue Klasse von anorganisch-organischen Verbindungen dar.

Die Erfindung betrifft auch Herstellungsverfahren der neuen Verbindungen der Formel I.

Erfindungsgemäß kann man

a) zur Herstellung von Verbindungen der Formel I, in denen Q Wasserstoff, Vinyl, Allyl, Halogenalkyl oder Halogenphenyl ist, ein käfigartiges Doppelringsilicat oder dessen Lösung oder eine Lösung einer käfigartigen Doppelringkieselsäure, jeweils im Molekül sechs, acht oder 10 Si-Atome und entsprechend 15, 20 oder 25 O-Atome enthaltend, mit einem Disiloxan ($R^{17}R^{18}$ $R^{19}Si_2$)O oder einem Silan $R^{17}R^{18}R^{19}R^{20}Si$ oder einem Gemisch beider umsetzen, worin $R^{17}$ und $R^{18}$ gleiche oder verschiedene, geradkettige oder verzweigte $C_1$-$C_5$-Alkylreste sind oder $R^{17}$ Phenyl ist; $R^{20}$ ist Halogen, Hydroxy, Alkoxy oder RCOO-, worin R ein $C_1$-$C_3$-Alkylrest, und $R^{19}$ ist Wasserstoff, Vinyl, Allyl, Halogenalkyl oder Halogenphenyl. Diese Umsetzung kann auch unter Zusatz eines Silanes $(R)_3SiR^{20}$ und/oder eines Hexaalkyldisiloxanes $(R_3Si)_2O$ erfolgen, worin R und $R^{20}$ die oben genannte Bedeutung haben. Dadurch kann die Anzahl der reaktionsfähigen Substituenten zu den stabilen Substituenten auf gewünschte Verhältnisse eingestellt werden.

Alle diese Umsetzungen können erfindungsgemäß bei einem Molverhältnis Silan (Summe aller Silane) und/oder Disiloxan (Summer aller Disiloxane) zu $SiO_2$ zwischen 1 zu 1 und 80 zu 1 und bei einer Temperatur zwischen 5 °C und 50 °C, vorzugsweise zwischen 10 °C und 30 °C, vorgenommen werden.

Zur Isolierung eines neuen, käfigartigen Doppelringkieselsäurederivates besteht die bekannte Möglichkeit, daß man die nach der Umsetzung gebildete wäßrige Phase von der vorhandenen organischen Phase trennt, die organische Phase mit Wasser bis zu einem pH-Wert von etwa 7 wäscht, bei einem Druck zwischen 100 Pa 2000 Pa und einer Temperatur zwischen 40 °C und 60 °C bis zur beginnenden Kristallisation destillativ behandelt und anschließend das gebildete Kristallisat von der Mutterlauge abtrennt und trocknet.

Als käfigartiges Doppelringsilicat ist erfindungsgemäß ein Tetraalkylammoniumsilicat der allgemeinen Formel

$[NR^5_4]_x H_zSi_yO_{2,5y} . a H_2O$

Tetraalkylalkanolammoniumsilicat der allgemeinen Formel

$[NR^6_4]_x H_zSi_yO_{2,5y} . a H_2O$

und/oder Tetraalkanolammoniumsilicat der allgemeinen Formel

$[NR^{22}_4]_x H_zSi_yO_{2,5y} . a H_2O$

einsetzbar, worin $R^5$ gleicher oder verschiedene, geradkettige oder verzweigte Alkylreste mit 1 bis 5 Kohlenstoffatomen, $R^6$ gleiche oder verschiedene, geradkettige oder verzweigte Alkylreste mit 1 bis 5 Kohlenstoffatomen und gleiche, verschiedene oder geradkettige Alkanolreste mit 1 bis 5 Kohlenstoffatomen, $R^{22}$ gleiche, verschiedene oder geradkettige Alkanolreste mit 1 bis 5 Kohlenstoffatomen, x eine Zahl zwischen 0,5 und y, y die Zahlen 6, 8 oder 10, z = y - x und a eine Zahl zwischen 2 und 400 bedeuten.

Ein Teil der Alkylammonium- oder der Alkanolammonium-Gruppe kann durch Alkali ersetzt sein.

Das käfigartige Doppelringsilicat oder die Lösung des käfigartigen Doppelringsilicats sind in Form einer konzentrierten wäßrigen Lösung oder in Form einer verdünnten wäßrigen Lösung in Gegenwart eines

polaren organischen Lösungsmittels einsetzbar, wobei unter einer konzentrierten Lösung eine Lösung zu verstehen ist, die sich im allgemeinen dicht vor ihrer Kristallisation befindet. Die $SiO_2$-Konzentration einer konzentrierten Lösung ist von der Art der $R^5$, $R^6$, $R^{22}$-Gruppen der Ammoniumkationen abhängig und nimmt Werte zwischen 0,5 M bis 4 M an. In einer verdünnten wäßrigen Lösung liegt in Abhängigkeit von den $R^5$, $R^6$, $R^{22}$-Gruppen eine 0,1 M bis 0,8 M $SiO_2$-Konzentration vor.

Die erfindungsgemäß einsetzbare Lösung der käfigartigen Doppelringkieselsäure kann in Form einer sauren wäßrigen Lösung mit einem pH-Wert zwischen 2 und 3 erfolgen oder mit Zusatz eines polaren organischen Lösungsmittels.

Das polare organische Lösungsmittel ist aus der Gruppe der organischen Lösungsmittel Alkohole, Ketone, bevorzugt Aceton, cyclische Ether, bevorzugt Tetrahydrofuran und Dioxan, und Dimethylsulfoxid auszuwählen.

Die Silylierung mit einem Silan erfolgt in Form eines Gemisches aus dem Silan, einem organischen Lösungsmittel und einem organischen Lösungsvermittler, wobei in dem Gemisch auf 1 Volumenanteil Silan bezogen 0,1 bis 10 Volumenanteile des organischen Lösungsmittels und 1 bis 10 Volumenanteile des organischen Lösungsvermittlers vorliegen.

Die Silylierung mit einem Disiloxan erfolgt in Form eines Gemisches aus dem Disiloxan, einer wäßrigen Lösung einer anorganischen Säure und einem organischen Lösungsvermittler, wobei in dem Gemisch auf 1 Volumenanteil Disiloxan bezogen 0,5 bis 5 Volumenanteile des organischen Lösungsvermittlers und 0,5 bis 4 Volumenanteile halbkonzentrierte wäßrige der anorganischen Säure vorliegen.

Die Silylierung mit einem Silan und einem Disiloxan erfolgt in Form eines Gemisches aus dem Silan, dem Disiloxan und einem organischen Lösungsvermittler, wobei in dem Gemisch auf 1 Volumenanteil Silan bezogen 0,1 bis 10 Volumenanteile Disiloxan und 1 bis 10 Volumenanteile des organischen Lösungsvermittlers vorliegen.

Bei einer Silylierung mit einem Silan und einem Trialkylsilan in Form eines Gemisches aus dem Silan, dem Trialkylsilan, einem organischen Lösungsmittel und einem organischen Lösungsvermittler liegen in dem Gemisch auf 1 Volumenanteil Silan bezogen 0,02 bis 50 Volumenanteile Trialkylsilan, 0,1 bis 10 Volumenanteile des organischen Lösungsmittels und 1 bis 10 Volumenanteile des organischen Lösungsvermittlers vor.

Bei einer Silylierung mit einem Disiloxan und einem Hexaalkyldisiloxan in Form eines Gemisches aus dem Disiloxan, dem Hexaalkyldisiloxan, einer wäßrigen Lösung einer anorganischen Säure und einem organischen Lösungsvermittler liegen in dem Gemisch auf 1 Volumenanteil Disiloxan bezogen 0,02, bis 50 Volumenanteile Hexaalkyldisiloxan, 0,5 bis 4 Volumenanteile halbkonzentrierte wäßrige Lösung der anorganischen Säure und 0,5 bis 5 Volumenanteile des organischen Lösungsvermittlers vor.

Bei einer Silylierung mit einem Silan, einem Disiloxan, einem Trialkylsilan und einem Hexaalkyldisiloxan sind diese Verbindungen einsetzbar in Form eines Gemisches aus

- dem Silan, dem Hexaalkyldisiloxan und einem organischen Lösungsvermittler,
- dem Disiloxan, dem Trialkylsilan und einem organischen Lösungsvermittler,
- dem Silan, dem Disiloxan, dem Trialkylsilan und einem organischen Lösungsvermittler,
- dem Silan, dem Disiloxan, dem Hexaalkyldisiloxan und einem organischen Lösungsvermittler

oder

- dem Silan, dem Disiloxan, dem Trialkylsilan, dem Hexaalkyldisiloxan und einem organischen Lösungsvermittler.

Bei einer Silylierung mit einem Gemisch aus dem Silan, dem Disiloxan, dem Trialkylsilan, dem Hexaalkyldisiloxan und dem organischen Lösungsvermittler liegen in dem Gemisch auf 1 Volumenanteil Silan bezogen 0,1 bis 10 Volumenanteile Disiloxan, 0,02 bis 50 Volumenanteile Trialkylsilan, 0,1 bis 10 Volumenanteile Hexaalkyldisiloxan und 1 bis 10 Volumenanteile des organischen Lösungsvermittlers vor.

Erfindungsgemäß einsetzbar sind als

- organisches Lösungsmittel geradkettige Alkane, bevorzugt n-Heptan, oder ein Aromat, bevorzugt Toluen,
- organischer Lösungsvermittler ein Alkohol, bevorzugt iso-Propanol, ein Keton, bevorzugt Aceton oder ein Säureamid, bevorzugt Dimethylformamid,
- wäßrige Lösung der anorganischen Säure ein 1 M bis 13 M Salzsäure oder 1 M bis 12 M Schwefelsäure.

Die neuen käfigartigen Doppelringkieselsäurederivate der Formel I mit Q = H, Vinyl, Allyl, Halogenalkyl, Halogenphenyl stellen kristalline Verbindungen dar, die in Wasser unlöslich sind und sich in polaren und besonders gut in apolaren Lösungsmitteln wie Tetrachlorkohlenstoff, n-Heptan und Toluen lösen. Sie weisen keinen Schmelzpunkt auf und zersetzen sich oberhalb 250 °C. Auf Grund ihrer reaktiven funktionellen Gruppen gehen sie für diese Gruppen typische Reaktionen ein.

Erfindungsgemäß kann man

b) Zur Herstellung von Verbindungen der Formel I, in denen Q Halogen oder Hydroxy ist, eine Verbindung

der allgemeinen Formel (II).

$Si_yO_{2.5\,y}\,(SiR^1R^2R^3)_n(SiR^1R^2H)_{y-n}$ (II)

worin $R^1$, $R^2$, $R^3$, y und n die oben genannte Bedeutung aufweisen, mit einem Halogenierungsmittel halogenieren und anschließend die halogenierte Verbindung hydrolysieren.

Bevorzugte Halogenierungsmittel sind N-Bromsuccinimid oder Chlor in $CCl_4$-Lösung bzw. Brom in $CCl_4$-Lösung. Eine anschließende Hydrolyse der Halogenverbindung zur Hydroxyverbindung kann mit Wasser in organischen Lösungsmitteln bei Anwesenheit von Halogenwasserstoffakzeptoren, wie $NaHCO_3$, Pyridin, $(NH_4)_2CO_3$ oder Alkalihydroxid erfolgen.

Die Halogenierung, insbesondere die Bromierung erfolgt durch Mischen der in trockenem $CCl_4$ gelösten Substanz der Formel II mit in $CCl_4$ gelöstem n-Bromsuccinimid bei Siedetemperatur des $CCl_4$. Die Hydrolyse der Si-Halogenverbindung erfolgt vorzugsweise mit Wasser/Aceton bzw. Wasser/Diethylether mit Hydrogencarbonat bzw. Pyridin als Säureakzeptor. Die Halogen oder OH enthaltenden Verbindungen können als reaktive Zwischenprodukte für die Herstellung Si-reicher Polymerisate dienen.

Erfindungsgemäß kann man

c) Zur Herstellung von Verbindungen der Formel I, in denen Q ein Epoxyrest ist, der gegebenenfalls über eine Ethergruppe gebunden sein kann, eine Verbindung der allgemeinen Formel II, worin $R^1$, $R^2$, $R^3$, y und n die oben genannte Bedeutung haben, durch Addition mit einer Verbindung der allgemeinen Formel (VI), worin $R^7$ ein geradkettiger oder verzweigter Alkenylrest mit 2 bis 5 Kohlenstoffatomen ist, der gegebenenfalls eine Etherbindung aufweist, und $R^8$ Wasserstoff oder ein Alkylrest mit 1 bis 3 Kohlenstoffatomen ist, umsetzen.

$R^7$ ist vorzugsweise ein Alkenylrest mit 2 bis 4 Kohlenstoffatomen und $R^8$ ist vorzugsweise Wasserstoff. Eine besonders bevorzugte Verbindung der Formel (VI) ist der Allylglycidylether.

Die Addition der H-silylierten Doppelringkieselsäurederivate entsprechend Formel II an die unter c) genannten ungesättigten Verbindungen erfolgt vorzugsweise in Toluenlösung bei Reaktionstemperaturen um 110 °C unter Verwendung eines Pt-Katalysators. Die erhaltenen Produkte sind Si-reiche Verbindungen mit reaktionsfähigen Epoxygruppen, die in organischen Lösungsmitteln löslich sind und mit weiteren Verbindungen wie z. B. Aminen, Alkoholen und Grignardverbindungen umgesetzt werden können. Desweiteren sind Polykondensationsreaktionen zu polymeren Si-reichen Reaktionsprodukten durchführbar.

Erfindungsgemäß kann man weiterhin

d) Zur Herstellung von Verbindungen der Formel I, worin Q ein aliphatischer geradkettiger oder verzweigter $C_2$-bis $C_{20}$-Alkyl- oder $C_2$-$C_8$-Alkenylrest ist, die gegebenenfalls substituiert sein können, eine Verbindung der allgemeinen Formel II durch Addition mit einer entsprechenden aliphatischen geradkettigen oder verzweigten Alkenyl- oder Alkinylverbindung umsetzen.

Bevorzugte Alkenylverbindungen sind solche mit 2 bis 8 Kohlenstoffatomen, wie z. B. Ethylen, Propylen, Hexen-1, Octen-1 oder substituierte Alkenylverbindungen, wie But-2-en-1,4-Derivate oder 2-Chlorbuta-1,3-dien.

Die Addition der H-silylierten Doppelringkieselsäurederivate entsprechend Formel II an die genannten ungesättigten Verbindungen erfolgt vorzugsweise in Toluen-Lösung unter Zusatz von Hexachloroplationsäure als Katalysator bei Temperaturen um 110 °C.

Bevorzugte Alkinylverbindungen sind solche mit 2 bis 5 Kohlenstoffatomen, wie z. B. Ethin, Propin, Butin oder substituierte Alkinylverbindungen, wie solche der allgemeinen Formel IV

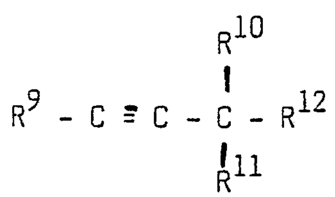

(IV)

worin $R^9$ Wasserstoff, Alkyl mit 1 bis 10 Kohlenstoffatomen (vorzugsweise $C_1$-$C_3$-Alkyl, insbesondere Methyl), Cyclohexyl, Phenyl, $-CH_2OH$, $-CH_2Hal$ (wobei Hal vorzugsweise Chlor ist) oder $-CR^{13}R^{14}OH$ (worin $R^{13}$ und $R^{14}$ $C_1$-$C_3$-Alkyl, vorzugsweise Methyl, oder Wasserstoff sein können) bedeutet;

$R^{10}$ und $R^{11}$ sind gleich oder verschieden und stellen $C_1$-$C_3$-Alkyl, vorzugsweise Methyl, oder Wasserstoff dar; und $R^{12}$ ist Hal, OH oder $-O(CH_2CH_2O)_nH$, mit der Maßgabe, daß, wenn $R^{12}$ $-O(CH_2CH_2O)_n$ H ist dann $R^9$ die Bedeutung $-CR^1R^2OH$ hat, wobei n eine ganze Zahl von 1 bis 40 sein kann, vorzugsweise 5 bis 15.

Von den Alkinverbindungen der Formel (IV) sind solche besonders bevorzugt, in denen $R^9$, $R^{10}$ und $R^{11}$ Wasserstoff und $R^{12}$ OH ist, oder $R^9$ $-CH_2OH$, $R^{10}$ und $R^{11}$ Wasserstoff und $R^{12}$ $-O(CH_2CH_2O)_{5\text{ bis }15}$ H ist.

Die Umsetzung der Ausgangsverbindungen kann mit oder ohne Lösungsmittel, in Anwesenheit eines Hydrosylilierungskatalysators in Mengen von kleiner als $10^{-2}$ mol/mol Dreifachbindung zwischen 25 und 150 °C, vorzugsweise zwischen 60 und 100 °C, im Molverhältnis 1 : 1 bis 1 : 1,3 (Alkin : SiH-Verbindung) innerhalb von 30 Minuten bis 5 Stunden zur vollständigen Reaktion gebracht werden. Die substituierten oder nichtsubstituierten erfindungsgemäßen Alkenylverbindungen sind in einfachen Apparaturen unter Inertgasatmosphäre in einer Eintopfreaktion herstellbar.

Bei diesen Verfahren werden Produkte erhalten, die zusammen mit organischen Substanzen kieselsäurereiche Mischungen ergeben bzw. kieselsäurereiche Zwischenprodukte mit verbleibenden Doppelbindungen darstellen, die für Beschichtungen verwendet werden können.

Man kann aber auch Verbindungen, in denen Q ein substituierter aliphatischer geradkettiger Alkylrest der Formel $(CH_2)_mB$ ist, worin B eine primäre oder sekundäre Aminogruppe ist und m eine Zahl von 1 bis 3 ist, herstellen, indem man eine Verbindung der allgemeinen Formel (V)

$Si_y)O_{2,5\,y}(SiR^1R^2R^3)_n(SiR^1R^2(CH_2)_mHal)_{y-n}$ (V)

worin $R^1$, $R^2$, $R^3$, m, n und y die genannte Bedeutung haben und Hal Halogen, vorzugsweise Chlor und Brom darstellt, mit einem primären oder sekundären Amin zu entsprechenden Aminoalkylkieselsäurederivaten umsetzt. Bevorzugte Amine sind Monoalkylamine wie Methyl- oder Ethylamin, Dialkylamine wie Diethylamin oder auch Allylamin. Die Reaktion erfolgt vorteilhaft bei erhöhter Temperatur nach Zusammengeben der Reaktionspartner.

e) Zur Herstellung von Verbindungen, in denen Q ein Carbonsäurerest oder der Rest eines Carbonsäurederivates ist, wird erfindungsgemäß eine Verbindung der allgemeinen Formel II, worin $R^1$, $R^2$, $R^3$, y und n die oben genannte Bedeutung haben, mit einer ungesättigen Säure oder einem ungesättigten Säurederivat unter bekannten Bedingungen umgesetzt.

f) Zur Herstellung von Verbindungen, in denen Q z. B. ein Ethylcyclohexen-oder ein Ethylbenzenrest bedeutet wird erfindungsgemäß eine Verbindung der allgemeinen Formel II, worin $R^1$, $R^2$, $R^3$, y und n die oben genannte Bedeutung haben, mit Vinylcyclohexen bzw. Styren unter bekannten Bedingungen umgesetzt.

Erfindungsgemäß kann man

g) Zur Herstellung von Verbindungen, in denen Q ein Silylalkyl- oder Siloxanylalkylrest oder Silylphenylalkylrest darstellt, eine Verbindung der allgemeinen Formel III

$Si_yO_{2,5\,y}(SiR^1R^2R^3)_n(SiR^1R^2R^4)_{y-n}$ (III)

worin $R^1$, $R^2$, $R^3$, y und n die oben genannte Bedeutung haben und $R^4$ Vinyl oder Allyl ist, durch Addition mit einem Trialkylsilan der allgemeinen Formel $(R^{23})_3$ SiH umsetzen, worin $R^{23}$ ein geradkettiger oder verzweigter Alkylrest sein kann mit 1 bis 5 C-Atomen;

oder mit einem Alkylphenylsilan der allgemeinen Formel $(CH_3)_{3-p}(R^{24})_p$ SiH, worin $R^{24}$ eine Phenyl- oder substituierter Phenylrest ist, wobei als Substituent beispielsweise Alkyl, Halogen, Hydroxy, Amin, Alkoxy aber auch andere Gruppen vorhanden sein können, und p gleich eins oder zwei ist umsetzen;

oder

mit einem Trialkoxysilan der allgemeinen Formel $(R^{15}O)_3SiH$, worin $R^{15}$ gleich oder verschieden sein kann und Methyl, Ethyl oder Propyl bedeutet umsetzen, oder mit einem gemischten Alkyl/Phenyl/Alkoxysilan der allgemeinen Formel $(R^{16})_{3-p}(R^{15}O)_pSiH$, worin $R^{16}$ gleich oder verschieden sein kann und Alkyl oder Phenyl bedeutet, $R^{15}$ gleich oder verschieden sein kann und die genannte Bedeutung hat und p ebenfalls die genannte Bedeutung hat umsetzten;

oder mit einem oligomeren oder polymeren SiH-Gruppen enthaltenden Siloxan entsprechend der allgemeinen Formel VII

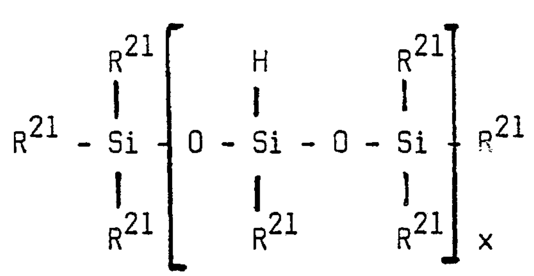

(VII)

worin $R^{21}$ Methyl und/oder Phenyl und x eine ganze Zahl von 1 bis 50 ist umsetzen;

oder mit Tris-Trimethylsiloxysilan umsetzen.

Die Reaktion der vinylsilylierten Doppelring-Kieselsäure entsprechend Formel III mit H-Silanen oder H-Siloxanen, beispielsweise mit Triethylsilan, Triethoxysilan oder dem Heptamethyltrisiloxan ($M_2D^H$; Formel VII, x = 1) erfolgt vorzugsweise in Toluen-Lösung unter Verwendung eines Pt-Katalysators bei Reaktionstemperaturen um 110 °C. Die Additionsprodukte sind in organischen Lösungsmitteln lösliche Öle mit hohem Si-Gehalt. Bei der Reaktion der Verbindung entsprechend Formel III mit H-Siliconölen kann deren Eigenschaft als Verstärkerkomponente ausgenutzt werden.

Erfindungsgemäß kann man

h) zur Herstellung von Verbindungen, in denen Q ein durch Alkenyl oder primäres oder sekundäres Amin substituierter Phenylrest ist, eine Verbindung der allgemeinen Formel (VIII)

$Si_yO_{2,5\,y}(SiR^1R^2R^3)_n(SiR^1R^2A)_{y-n}$ (VIII)

worin $R^1$, $R^2$, $R^3$, y und n die oben genannte Bedeutung haben und A Halogenphenyl ist, entweder mit einem primären oder sekundären Amin umsetzen oder mit einer Alkenyl-Grignardverbindung. Alkenyl ist dabei vorzugsweise eine Gruppe mit 2 bis 3 Kohlenstoffatomen, beispielsweise Allylmagnesiumchlorid. Die dabei hergestellten Alkenylphenyl-Kieselsäurederivate können beispielsweise Ausgangsverbindungen für Ionenaustauscherharze mit verbesserten Eigenschaften sein.

Erfindungsgemäß kann man

i) zur Herstellung von Verbindungen, in denen Q ein Rest eines primären Alkanols ist, eine Verbindung der allgemeinen Formel (VIII), worin $R^1$, $R^2$, $R^3$, y und n die oben genannte Bedeutung haben und A Halogenalkyl bedeutet, mit einem Grignard-Reagenz in Anwesenheit von Sauerstoff unter bekannten Bedingungen umsetzen.

Die Verbindungen der allgemeinen Formel I, worin y, n, $R^1$, $R^2$ und $R^3$ die oben genannte Bedeutung haben

und

Q Wasserstoff, Hydroxy, Vinyl, Allyl, Epoxy, Halogenalkyl, Halogenphenyl, ein Carbonsäure- bzw. Carbonsäureesterrest oder der Rest eines primären Alkanols ist,

können Polymerisate bilden.

Bei der Polymerisationsreaktion können als monomere reaktionsfähige Verbindungen mit olefinischen Doppelbindungen solche Monomere wie Ethen, Propen, But-1-en, Vinylchlorid, Methacrylsäure, Acrylsäureester, Styren eingesetzt werden, aber auch monomere Verbindungen der Formel I, worin y, n, $R^1$, $R^2$, $R^3$ die genannte Bedeutung haben und Q Vinyl oder Allyl ist. Bei der letztgenannten Polymerisation können beispielsweise Verbindungen der Formel I mit Q = Vinyl mit Verbindungen der Formel I mit Q = Allyl polymerisiert werden oder solche mit unterschiedlichen n-Werten. Aber auch die reine Homopolymerisation ist möglich. Dabei ist jedoch zu beachten, daß aus sterischen Gründen nicht alle möglichen Polymerisationsstellen der Doppelringe reagieren.

Die Polymerisationsreaktion erfolgt unter den für diese Reaktionen üblichen Verfahrensbedingungen. Bei der radikalischen Polymerisation von z. B. Ethen oder Vinylchlorid mit den Verbindungen der Formel I wird die Startreaktion durch radikal- oder ionenbildende Katalysatoren ausgelöst. Dafür können übliche Borverbindungen wie Benzoylperoxid und tert. Butylcumylperoxid oder Azobisisobutyronitril eingesetzt werden. Es sind auch Metallalkylverbindungen, wie Aluminiumtriethyl oder Lithiumethyl in Gegenwart apolarer Lösungsmittel z. B. n-Heptan als Polymerisationskatalysatoren geeignet. Homopolymerisate von Verbindungen der Formel I mit Q = Vinyl bzw. Allyl können zweckmäßig durch fotochemische Polymerisation der Lösung mit einem speziellen Fotoimitiator in Form des Benzoinisopropylethers hergestellt werden.

Erfindungsgemäß werden Kopolymerisate aus käfigartig aufgebauten Doppelringkieselsäurederivaten und polymerisationsfähigen Verbindungen auch hergestellt, indem man organophile Doppelringkieselsäurederivate mit käfigartigen Strukturen der allgemeinen Formel I

$Si_yO_{2,5\,y}(SiR^1R^2R^3)_n(SiR^1R^2Q)_{y-n}$

worin y, n, $R^1$ und $R^3$ die oben genannte Bedeutung aufweisen und

Q ein Epoxyrest ist

mit einem Polyglykol polyaddiert.

Die Doppelringkieselsäurederivate der Formel I existieren als Doppeldreiring (y = 5)-, Doppelvierring (y = 8)- oder Doppelfünfring (y = 10)-Verbindungen, wobei die Doppelvierringverbindungen besonders bevorzugt sind. Diese Verbindungen können bis zu 6 bzw. 8 bzw. 10 reaktionsfähige Epoxygruppen pro Doppelring tragen, wobei es möglich ist, daß ein Teil dieser Gruppen durch relativ wenig reaktionsfähige Gruppen des Typs - $(SiR^1R^2R^3)_n$ ersetzt sein kann. Vorzugsweise ist n = 0 bis 4, wenn y = 6; n ist 0 bis 6, wenn y = 8 und n ist 0 bis 8, wenn y = 10, wobei der jeweilige Wert für n stets als statistischer Mittelwert aufzufassen ist.

Ein bevorzugter Epoxyrest ist z. B. der Glycidoxypropylrest

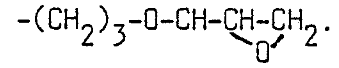

Bevorzugte Polyglykole sind z. B. Polyethylenglykol bestehend aus 5 - 40 Baueinheiten oder ein Polypropylenglykol bestehend aus 10 - 50 Baueinheiten.

Erfindungsgemäß werden Kopolymerisate käfigartig aufgebauten Doppelringkieselsäurederivaten und polymerisationsfähigen Verbindungen, auch hergestellt, in dem man organophile Doppelringkieselsäurederivate mit käfigartigen Strukturen der allgemeinen Formel I

$Si_yO_{2,5\,y}(SiR^1R^2R^3)_n(SiR^1R^2Q)_{y-n}$

worin y, n, $R^1$, $R^2$ und $R^3$ die oben genannte Bedeutung haben und

Q Hydroxy ist,

mit einem Siloxandiol, mit Organo-H-Siloxanen oder einer Verbindung der Formel I, worin y, n, $R^1$, $R^2$, $R^3$ die genannte Bedeutung haben, und Q Hydroxy oder H ist, polykondensiert.

Die Polykondensation erfolgt unter Wasser- bzw. Wasserstoffabspaltung und bei den dafür üblichen Reaktionsbedingungen. Die Polykondensation erfolgt in Gegenwart basischer, bevorzugt jedoch mittels saurer Katalysatoren in Anwesenheit wasserbindender Substanzen, wie z. B. Acetylchlorid und Molekularsiebe. Bevorzugte Siloxandiole sind z. B. die Polydimethylsiloxan-alpha, omega-diole, bestehend aus durchschnittlich 30 Ketteneinheiten.

Bevorzugte Organo-H-siloxane sind Verbindungen der allgemeinen Formel VII.

Erfindungsgemäß werden Kopolymerisate aus käfigartig aufgebauten Doppelringkieselsäurederivaten und polymerisationsfähigen Verbindungen, auch hergestellt, indem man organophile Doppelringkieselsäurederivate mit käfigartigen Strukturen der allgemeinen Formel I

$Si_yO_{2,5\,y}(SiR^1R^2R^3)_n(SiR^1R^2Q)_{y-n}$

worin y, n, $R^1$, $R^2$ und $R^3$ die oben genannte Bedeutung haben und

Q Wasserstoff ist,

mit einer monomeren, mehrfach ungesättigten Verbindung mit olefinischen Doppelbindungen, mit einer Verbindung der Formel I, worin y, n, $R^1$, $R^2$, $R^3$ die genannte Bedeutung haben und Q Vinyl oder Allyl ist, polyaddiert oder mit siOH-Gruppen enthaltenden Siloxanen oder Verbindungen der Formel I, worin Q = H ist, polykondensiert.

Vorzugsweise ist das mehrfach ungesättigte Monomere aus der aus Butadien, Isopren und Chloropren bestehenden Gruppe ausgewählt, insbesondere ist es Butadien.

Eine bevorzugte Additionsreaktion ist die zwischen Verbindungen der Formel I mit Q = H und Verbindungen der Formel I und Q = Vinyl- oder Allyl. In Abhänigkeit vom molaren Vinyl- bzw. Allyl/H-Verhältnis, der eingesetzten Ausgangskomponenten und dem Wert n in Formel I werden Additionsprodukte unterschiedlichen Vernetzungsgrades und dementsprechend unterschiedlicher Löslichkeit erhalten.

Beträgt beispielsweise das molare Vinyl/H-Verhältnis 2 : 1 bei jeweils n = 0, so wird ein in organischen Lösungsmitteln lösliches Produkt mit einem relativ geringen Vernetzungsgrad und einem Anteil nicht umgesetzter Vinylsilylgruppen erhalten. Durch eine nachträgliche Addition von bestimmten H-Silanen, z. B. Triethyl-H-Silan, ist der Gehalt an Vinylsilylgruppen zu verkleinern. Beträgt das Vinyl/H-Verhältnis der Ausgangskomponente der Formel I mit Q = Vinyl bzw. H z. B. 0,8 : 1 so wird ein stark vernetztes unlösliches Gel mit einem Anteil nicht umgesetzter SiH-Gruppen erhalten. Durch eine nachfolgende Additionsreaktion mit einem einfach ungesättigten Alkan, z. B. Octen-1, lassen sich die Anzahl der SiH-Gruppen reduzieren und die Eigenschaften des Gels modifizieren. Bei einem molaren Vinyl/H-Verhältnis der Ausgangskomponenten von 1 : 1 (bei n = 0) wird ein hochvernetztes in Wasser und organischen Lösungsmitteln unlösliches Produkt erhalten, das jedoch gut organische Lösungsmittel, wie z. B. Toluen absorbiert. Werden Ausgangskomponenten mit n > 1 im Molverhältnis Vinyl/H = 1 : 1 addiert, so ergibt sich mit zunehmendem n eine verbesserte Löslichkeit der Reaktionsprodukte in organischen Lösungsmitteln mit parallel dazu abnehmendem Vernetzungsgrad. Die Reaktion wird vorzugsweise unter Feuchtigkeitsausschluß durchgeführt. Bevorzugt wird ein Katalysator eingesetzt, z. B. Hexachlorplatinsäure.

Die analytische Untersuchung der Additionsprodukte mit Hilfe IR-, $^1H$-NMR- und $^{29}Si$-NMR-Spektroskopie zeigt, daß bei von 1 abweichenden molaren Vinyl/H-Verhältnissen der Reaktionspartner eine vollständige Addition der im Unterschuß vorhandenen Komponente erfolgt. Bei einem Molverhältnis von 1 : 1, das einem maximalen Vernetzungsgrad entspricht, setzt sich aufgrund der Raumbeanspruchung der Doppelringstrukturen ein kleinerer Teil der ≡SiH-Gruppen nicht mit den Vinylgruppen der Doppelringkieselsäurederivate um.

Der Vernetzungsgrad im Reaktionsprodukt ist jedoch so hoch, daß es ein in organischen Lösungsmitteln unlösliches Gel bildet. Die $^{29}Si$-NMR-Festkörperuntersuchungen weisen darauf hin, daß es sich bei dem Reaktionsprodukt des Vinyl-bzw. Allyl/H = 1 : 1-Ansatzes (n = 0) um ein hochvernetztes Organokieselgel mit einer ungewöhnlichen Struktur aus wenigstens zwei unterschiedlichen Hohlraumtypen - den Doppelringkäfigen und den Hohlräumen zwischen den Käfigen - handelt.

Die Reaktionsbedingungen der Addition sind z. B. folgende:

Die Ausgangsverbindungen entsprechend Formel I (Q = H bzw. Vinyl oder Allyl) werden in 10 %iger Konzentration in Toluen gelöst, dazu wird ein Katalysator vorzugsweise ein Pt-Katalysator gegeben, der beispielsweise in Toluen in einer Konzentration von $10^{-4}$ bis $10^{-5}$ Mol Pt pro Mol Vinyl- bzw. Allylgruppe vorliegt. Das Reaktionsgemisch wird 0,7 - 15 Stunden auf eine Temperatur zwischen 80 und 120 °C, vorzugsweise 100 bis 110 °C erwärmt. Bei einem Molekülverhältnis Vinyl bzw. Allyl/H von 1 : 1 beginnt nach ca. 10 min die Gelbildung. Nach Abschluß der Reaktion wird das Gel isoliert und mit Toluen gewaschen. Nach Entfernung des Lösungsmittels im Vakuum wird das Reaktionsprodukt als ein weißes Pulver erhalten.

Eine bevorzugte Kondensationsreaktion ist die Reaktion zwischen Verbindungen der Formel I mit Q = H und Siloxandiolen, insbesondere mit Polydimethylsiloxan diolen, bei der unter Freisetzung von Wasserstoff polymere Verbindungen über Si-O-Si-Verknüpfungen gebildet werden.

Die nach dem erfindungsgemäßen Verfahren hergestellten Polymere sind allgemein als Beschichtungsmaterial einsetzbar, beispielsweise als Korrosionsschutzmittel, sie können aber auch als Vermittler zwischen Glas und Plastmaterialien eingesetzt werden. Bei einem Oberflächenschutz lassen sich durch die mögliche Anwesenheit reaktiver Gruppen am vorhandenen Polymer kleinere Moleküle gegebenenfalls nachträglich einpolymerisieren. Die neuen Polymere können aber auch als Absorptionsmittel eingesetzt werden, z. B. für chromatografische Zwecke (Trennphase) infolge ihrer definierten Hohlraumstrukturen.

## Beispiele

Die Erfindung soll nachstehend durch Beispiele näher erläutert werden, wobei diese Beispiele keine Einschränkung darstellen sollen.

### Beispiel 1

Herstellung einer vollständig Dimethyl-H-silylierten D4R-Kieselsäure der Formel $[H(CH_3)_2Si]_8Si_8O_{20}$ - ($Q_8M_8{}^H$)

Ein Gemisch aus 200 ml (1,37 M) Heptan, 400 ml (5,17 M) Dimethylformamid und 200 ml (1,85 M) Dimethylchlor-H-silan wird 15 min bei Raumtemperatur (20 °C) gerührt. Zu diesem Gemisch werden unter Rühren über 10 min 9,4 g (0,032 M) in kleinen Portionen gemörsertes Tetramethylammonium-Doppelvierringsilicat der Formel $[N(CH_3)_4]_8Si_8O_{20} \cdot 69\ H_2O$ gegeben. Die durch Zugabe des Silicats freiwerdende Wärme wird durch Kühlung abgeführt. 15 min nach Zugabe des Silicats wird die Reaktionsmischung im Eisbad auf ca. 2 °C abgekühlt und unter Rühren mit 1 l kaltem (2 °C) destillierten Wasser versetzt. Nach 2 min wird die wäßrige von der organischen Phase getrennt, letztere enthält im wesentlichen Heptan, Kondensationsprodukte des Dimethylchlor-H-silans, den D4R-Kieselsäureester und HCl. Zur Entfernung der HCl wird die organische Phase mehrmals mit Wasser bis zur neutralen Reaktion des Waschwassers ausgeschüttelt. Die flüchtigen Bestandteile der neutralen organischen Phase werden im Vakuum (2 . $10^3$ Pa) bei einer Badtemperatur bis 55 °C abdestilliert. Die zurückbleibende Mutterlauge mit Kristallausfällungen wird bei + 4 °C zur weiteren Kristallisation gebracht. Die erhaltenen Kristalle werden abgesaugt und auf Filterpapier getrocknet.

Ausbeute: 3 g = 75 % bezogen auf die eingesetzte Silicatmenge.

Gaschromatographische Reinheit des Reaktionsproduktes: 91 %.

Das $^{29}Si$-NMR-Spektrum der Probe (gelöst in Heptan) zeigt: 1 Signal bei - 1,8 ppm (Si-Atome der $(CH_3)_2HSi$-Gruppe) und 1 Signal bei - 109,1 ppm (Si-Atome des Kieselsäuregerüsts).

### Beispiel 2

Herstellung einer gemischt Dimethyl-H-silylierten und trimethylsilylierten D4R-Kieselsäure

Ein Gemisch aus 200 ml (0,96 M) Hexamethyldisiloxan, 400 ml (5,17 m) Dimethylformamid, 193,6 ml (1,51 M) Trimethylchlorsilan und 5,4 ml (0,05 M) Dimethylchlor-H-silan wird 15 min bei Raumtemperatur (20 °C) gerührt. Zu diesem Gemisch werden unter Rühren über 10 min 8 g (0,027 M) in kleinen Portionen gemörsertes Tetramethylammonium-Doppelvierringsilicat der Formel $[N(CH_3)_4]_8Si_8O_{20}$ . 69 $H_2O$ gegeben. Die durch Zugabe des Silicats freiwerdende Wärme wird durch Kühlung abgeführt. 15 min nach Zugabe des Silicats wird die Reaktionsmischung im Eisbad auf ca. 2 °C abgekühlt und unter Rühren mit 1 l kaltem (2 °C) destillierten Wasser versetzt. Nach 2 min wird die wäßrige von der organischen Phase getrennt, letztere enthält im wesentlichen Hexamethyldisiloxan, Kondensationsprodukte des Dimethylchlor-H-silans, den Doppelvierringkieselsäureester und HCl. Zur Entfernung der HCl wird die organische Phase mehrmals mit Wasser bis zur neutralen Reaktion des Waschwassers ausgeschüttelt. Die flüchtigen Bestandteile der neutralen organischen Phase werden im Vakuum (2 . $10^3$ Pa) bei einer Badtemperatur bis maximal 60 °C abdestilliert. Um noch eventuell anhaftende Lösungsmittelreste zu entfernen, wird der erhaltene Feststoff bei ca. 5 . $10^2$ Pa und einer Badtemperatur von 50 °C getrocknet.

Ausbeute: 93 % bezogen auf die eingesetzte Silicatmenge.

Der Gehalt an Kohlenstoff und Wasserstoff im Reaktionsprodukt beträgt 23,7 % C und 6,5 % H. Das $^{29}Si$-NMR-Spektrum der in $CDCl_3$ gelösten Substanz zeigt die folgenden Signale: a) $\delta$ = + 12,1 ppm (Si-Atome der $(CH_3)_3$ Si-Gruppe); b) $\delta$ = - 2,5 ppm (Si-Atome der $(CH_3)_2HSi$-Gruppe); c) $\delta$ = - 109,3 bis - 109,6 ppm (Si-Atome des Kieselsäuregerüsts).

Beispiel 3

Herstellung einer vollständig dimethylvinylsilylierten D4R-Kieselsäure der Formel $[(CH_2=CH)(CH_3)_2Si]_8Si_8O_{20}(Q_8M_8^V)$

Ein Gemisch aus 250 ml Tetramethyldivinyldisiloxan (1,09 M), 375 ml Isopropanol (4,91 M), 190 ml konzentrierter Salzsäure und 67 ml destilliertem Wasser wird 30 min bei 30 °C gerührt. Zu diesem Gemisch werden unter Rühren über 15 - 20 min 50 g (0,168 M) in kleinen Portionen gemörsertes Tetramethylammonium-Doppelvierringsilicat der Formel $[N(CH_3)_4]_8Si_8O_{20}$ . 69 $H_2O$ gegeben. Nach einer Rührzeit von 20 min wird die Reaktionsmischung auf ca. 2 °C abgekühlt und unter Rühren mit 800 ml kaltem (2 °C) destillierten Wasser versetzt.

Nach 2 min wird die wäßrige von der organischen Phase getrennt, letztere enthält im wesentlichen Tetramethyldivinyldisiloxan, den Doppelvierringkieselsäureester und HCl. Zur Entfernung der Hcl wird die organische Phase mehrmals mit Wasser bis zur neutralen Reaktion des Waschwassers ausgeschüttelt. Die flüchtigen Bestandteile der neutralen organischen Phase werden im Vakuum (2 . $10^3$ Pa) bei einer Badtemperatur bis maximal 65 °C abdestilliert. Die erhaltenen Kristalle werden in Ethanol umkristallisiert.

Ausbeute: 7,8 g = 50 % bezogen auf die eingesetzte Silicatmenge.

Gaschromatographische Reinheit: 95 %. Das $^{29}Si$-NMR-Spektrum der Probe (gelöst in $CDCl_3$) zeigt 1 Signal bei -0,1 ppm (Si-Atome der $(CH_3)_2CH_2$ = CHSi-Gruppe) und 1 Signal bei - 109,8 ppm (Si-Atome des Kieselsäuregerüsts).

Beispiel 4

Herstellung einer dimethylchlormethylsilylierten D4R-Kieselsäure der Formel $[(ClCH_2)(CH_3)_2Si]_8Si_8O_{20}$

Ein Gemisch aus 200 ml (1,37 M) Heptan, 400 ml (5,17 M) Dimethylformamid und 200 ml (1,48 M) Dimethylchlormethylchlorsilan wird 45 min bei Raumtemperatur (20 °C) gerührt.

Zu diesem Gemisch werden unter Rühren 7,59 g (0,026 M) gemörsertes Tetramethylammonium-Doppelvierringsilicat der Formel $[N(CH_3)_4]_8Si_8O_{20}$ . 69 $H_2O$ in kleinen Portionen über einen Zeitraum von 10 min gegeben. 15 min nach Zugabe des Silicats wird die Reaktionsmischung im Eisbad auf ca. 2 °C abgekühlt und unter Rühren mit 1 l kaltem (2 °C) destilliertem Wasser versetzt. Nach Trennung der Phasen wird die organische Phase mehrmals mit Wasser bis zur neutralen Reaktion des Waschwassers ausgeschüttelt. Die flüchtigen Bestandteile werden im Vakuum (2 . $10^3$ Pa - 5 . $10^2$ Pa) bei einer Badtemperatur

von 60 °C - 90 °C abdestilliert. Die erhaltenen Kristalle werden in Heptan umkristallisiert.

Ausbeute: 69 % bezogen auf eingesetzte Silicatmenge

Gaschromatographische Reinheit: 96 %

C- Gehalt: 20,6 % (berechnet 20,5 %)

H- Gehalt: 4,7 % (berechnet 4,6 %)

Massenspektroskopisch ermittelte Molmasse: 1404 (berechnet 1404)

$^{29}$Si-NMR-Signale der in Heptan gelösten Substanz: + 7,85 ppm (($(CH_3)_2ClCH_2Si$-); -108,45 ppm (D4R-Kieselsäuregerüst); Intensitätsverhältnis der beiden Signale 1 : 1.

Beispiel 5

Herstellung einer octyldimethylsylilierten D4R-Kieselsäure

Zu einer 10 %igen Lösung der Verbindung $[(CH_3)_2HSi]_8Si_8O_{20}$ in Toluen (0,5 Mol) werden 4 x $10^{-5}$ Mol Pt.pro Mol Octen-1,in Form der Hexachloroplatinsäure gegeben. Unter Rühren werden 4 Mol Octen-1 zur Toluenlösung zugetropft. Anschließend wird die Mischung auf ca. 110 °C erwärmt und ca. 14 Stunden bei dieser Temperatur gehalten. Nach dem Abdestillieren des Lösungsmittels im Vakuum wird das Reaktionsprodukt in öliger Konsistenz erhalten. Im $^{29}$Si-NMR-Spektrum sind zwei Signale im Intensitätsverhältnis von 1 : 1 nachzuweisen; a) $\delta$ = 11,94 ppm ($CH_3(CH_2)_7(CH_3)_2$ Si-); b) $\delta$ = - 109,53 ppm (D4R-Kieselsäuregerüst) jeweils bezogen auf THS = O. Die Abwesenheit des Signals der $(CH_3)_2$HSi-Gruppen ($\delta$ = ca. - 1,8 ppm) weist auf einen vollständigen Umsatz hin.

Beispiel 6

Herstellung einer octadecyldimethylsilylierten D4R-Kieselsäure

Ausgangsverbindung und Reaktionsbedingungen wie in Beispiel 1; als Reaktionskomponente werden 4 Mol Octadecen-1 dem Reaktionsgemisch zugefügt. Anschließend wird die Mischung 14 h auf 110 °C erwärmt. Nach Abdestillieren des Lösungsmittels im Vakuum wird das Reaktionsprodukt in wachsartiger Konsistenz erhalten, das bei Temperaturen größer als 45 °C erweicht. Das $^{29}$Si-NMR-Spektrum der in $CHCl_3$ gelösten Substanz zeigt zwei Signale im Intensitätsverhältnis von 1 : 1: a) $\delta$ = 12,0 ppm ($CH_3(CH_2)_{17}(CH_3)_2$Si-) b) $\delta$ = - 109,50 ppm (D4R-Kieselsäuregerüst). Die Abwesenheit des Signals der $(CH_3)_2$HSi-Gruppen ( $\delta$ = ca. - 1.8 ppm) spricht für einen vollständigen Umsatz.

Beispiel 7

Herstellung einer bromdimethylsylilierten D4R-Keiselsäure

Zu einer 1 %igen Lösung der Verbindung $[(CH_3)_2HSi]_8Si_8O_{20}$ (0,5 Mol) in getrocknetem $CCl_4$ werden 4 Mol getrocknetes N-Bromsuccinimid hinzugegeben und die Mischung unter Rühren 1 h unter Rückfluß erwärmt. Anschließend wird vom Succinimid abfiltriert und das Lösungsmittel des Filtrats im Vakuum entfernt. Das Reaktionsprodukt fällt in öliger Konsistenz an.

Beispiel 8

Herstellung eines D4R-Kieselsäurederivates mit Glycidoxyoprylresten

Eine Mischung aus Allylglycidylether (0,8 Mol), Hexachloroplatinsäure (0,8 . $10^{-5}$ Mol pro Mol Doppelbindung) und dem Kieselsäurederivat $[(CH_3)_2HSi]_8Si_8O_{20}$ (0,1 Mol) gelöst in Toluen (5 %ige Lösung) wird unter Rühren = 14 h am Rückfluß erhitzt. Nach dem abdestillieren des Lösungsmittels im

Vakuum wird ein öliges, in organischen Lösungsmitteln lösliches Produkt erhalten. Im Protonenresonanzspektrum des Reaktionsproduktes sind keine Protonensignale der ungesättigten Gruppe des Allylglycidylethers im Resonanzbereich von 5 - 6 ppm nachzuweisen; dies deutet auf einen vollständigen Umsatz der Reaktionspartner hin.

Eindeutig nachweisbar sind die unterschiedlichen Protonengruppen der neu geknüpften Bindung:

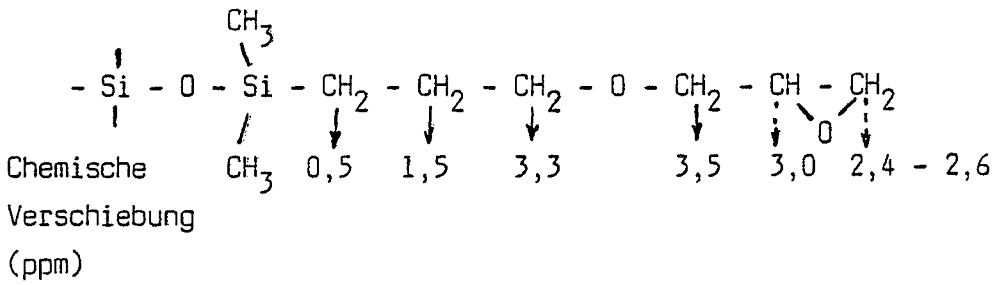


Das $^{29}$Si-NMR-Spektrum des Additionsproduktes zeigt zwei Signale mit etwa vergleichbarer Intensität:

a) $\delta$ = 12,27 ppm

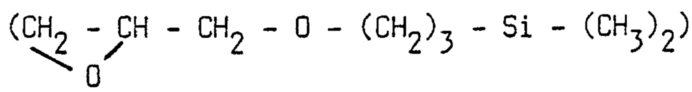

b) $\delta$ = - 109,78 ppm (D4R-Kieselsäuregerüst).

Die Abwesenheit des Signals der $(CH_3)_2HSi$-Gruppen ( $\delta$ = ca. - 1,8 ppm) weist auf einen vollständigen Umsatz hin.

Beispiel 9

Herstellung eines D4R-Kieselsäurederivats mit Ethylcyclohexenresten

Eine Mischung aus dem Kieselsäurederivate $[HSi(CH_3)_2]_8Si_8O_{20}$ (0,20 mMol), Vinylcyclohexen (3,17 mMol) Molverhältnis HSi : Vinyl = 1 : 2) und Hexa-Chlorplatinsäure als Katalysator (4 . $10^{-5}$ Mol pro Mol Doppelbindung) gelöst in 6 ml Toluen wurde 14 h auf 110 °C erhitzt. Nach dem Abdestillieren des Lösungsmittels im Vakuum wurde ein öliges Reaktionsprodukt erhalten, das in organischen Lösungsmitteln gut löslich ist. Das Auftreten von nur zwei scharfen Signalen mit vergleichbarer Intensität im $^{29}$Si-NMR-Spektrum mit

a) $\delta$ = - 109,55 ppm (D4R-Kieselsäuregerüst) und b) $\delta$ = 12,38 ppm

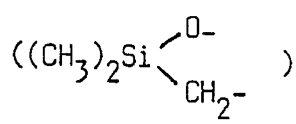

weist auf ein vollständig addiertes D4R-Kieselsäurederivat mit acht Ethylcyclohexen-Resten hin.

Beispiel 10

Herstellung von einen D4R-Kieselsäurederivat mit verzweigten Alkylsilylresten

Zu einer 10 %igen Lösung des Kieselsäurederivats $[(CH_3)_2CH_2=CHSi]_8Si_8O_{20}$ (0,5 Mol) in Toluen werden Hexachloroplatinsäure (4 . $10^{-5}$ Mol pro Mol Doppelbindung) und Triethylsilan (12 Mol) im Molverhältnis der Vinylgruppen : H-Si-Gruppen von 1 : 3 gegeben. Die Lösung wird ≧ 7 h auf ca. 100 °C

erhitzt. Nach dem Abdestillieren des Lösungsmittels und des überschüssigen Silans im Vakuum wird ein öliges Produkt erhalten. Mit Hilfe der $^1$H-NMR- und IR-Spektroskopie sind im Reaktionsprodukt keine unumgesetzten Vinylgruppen und SiH-Gruppen mehr nachzuweisen. Das Protonenresonanzsignal der neu geknüpften Bindung $\equiv Si-CH_2-CH_2-Si\equiv$ wurde bei 0,56 ppm nachgewiesen.
Das $^{29}$Si-NMR-Spektrum zeigt im wesentlichen 3 Signale in einem Intensitätsverhältnis von a : b : c = 1 : 1,1 : 1,1.
a) $\delta$ = - 109,45 ppm (Kieselsäuregerüst); b) $\delta$ = 7,83 ppm ($(C_2H_5)_3Si-CH_2-$)
c) $\delta$ = 12,20 pp ($-O-Si-CH_2$). Die Abwesenheit des Signals der ($(CH_3)_2CH=CHSi$)-Gruppen ( $\delta$ = ca. 0 ppm) und die vergleichbaren Signalintensitäten sprechen für eine vollständige Additionsreaktion.

Beispiel 11

Herstellung eines D4R-Kieselsäurederivates mit verzweigten Alkylsilylgruppen

Eine Mischung des Kieselsäurederivats $[(CH_3)_2CH_2=CHSi]_8Si_8O_{20}$ (0,5 Mol) in 10 %iger Toluenlösung, der Hexachloroplatinsäure (4 . $10^{-5}$ Mol pro Mol Doppelbindung) und des Heptamethyltrisiloxans ($M_2D^H$) (12 Mol) im Molverhältnis der Vinyl : H-Si-Gruppen von 1 : 3 wird = 6 h unter Rühren auf ca. 110 °C erhitzt. Nach dem Abdestillieren des Lösungsmittels und des überschüssigen Silans im Vakuum wurde ein Reaktionsprodukt öliger Konsistenz erhalten, das in organischen Lösungsmitteln löslich ist. Mit Hilfe der $^1$H-NMR-Spektroskopie wurde die Verbindungsbildung über $\geq Si-CH_2-CH_2-Si \leq$ Brücken ( $\delta$ = 0,55 ppm) und die Abwesenheit von unumgesetzten Vinylgruppen nachgewiesen. Die aus dem $^{29}$Si-NMR-Spektrum zu entnehmenden Signallagen
a) $\delta$ = -108,59 (Kieselsäuregerüst); b) $\delta$ = -21,28 ppm

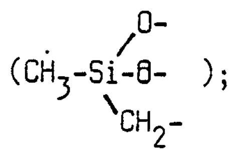

c) $\delta$ = 6,50 ppm($(CH_3)_3Si-O-$); und d) $\delta$ = 12,84 ppm

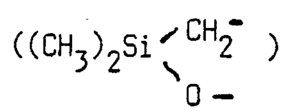

weisen auf eine vollständige Additionsreaktion hin.

Beispiel 12

Herstellung eines D4R-Kieselsäurederivates mit Doppelbindung enthaltenden Resten

Eine Mischung aus dem Kieselsäurederivat $[HSi(CH_3)_2]_8Si_8O_{20}$ (0,3 mMol), 1,4-bis-(Trimethylsiloxy)-but-2-in (2,8 mMol) und Hexachloroplatinsäure als Katalysator (2,5 . $10^{-4}$ Mol pro Dreifachbindung) gelöst in 1,8 ml abs. Toluen wurde bei 25 °C solange gerührt, bis ein Temperatursprung von etwa 10 °C beobachtet wurde (ca. 30 Minuten). Anschließend wurde die Mischung bei 60 °C sechs Stunden gehalten. Das Lösungsmittel und der überschüssige Silylether des Butindiols wurden vom Reaktionsprodukt durch Vakuumdestillation getrennt. Den Reaktionsverlauf kann man gut mit Hilfe der IR-Spektroskopie an Hand der intensiven Si-H-Bande (2130 $cm^{-1}$) verfolgen. Bei dieser Reaktion entstand eine hellgelbe, viskose Flüssigkeit, die in organischen Lösungsmitteln löslich ist. Die Umsetzung der Reaktionsprodukte verlief zu mehr als 90 %. Mit Hilfe der $^1$H-NMR-Spektroskopie wurde die Struktur nachgewiesen, $\delta$ = C = CH - : 6,53 ppm.
($(CH_3)_2CH_2=CHSi$)-Gruppen ( $\delta$ ca. 0 ppm) und die vergleichbaren Signalintensitäten sprechen für eine

vollständige Additionsreaktion.

Beispiel 13

Herstellung eines D4R-Kieselsäurederivates mit Doppelbindungen enthaltenden Resten

0,4 mMol des Kieselsäurederivates $[(CH_3)_2HSi]_4[(CH_3)_3Si]_4Si_8O_{20}$, 2,3 mMol des alpha, alpha-Strich-But-2-inyl-1,4-omega-hydroxy-dodeca-oxyethylens, 2,7 ml abs. Toluen und Hexachloroplatinsäure (5 . $10^{-4}$ Mol pro Dreifachbindung) wurden langsam erhitzt.

Bei etwa 45 °C beobachtete man eine Farbaufhellung des Gemisches. Anschließend wurde diese Lösung noch bis 75 °C erwärmt und die Temperatur 5 Std. gehalten. Nach etwa 3 Std. erhöhte sich die Viskosität der Mischung merklich. Nach der destillativen Abtrennung des Lösungsmittels erhielt man eine gelbe, viskose Flüssigkeit, die in polaren Lösungsmitteln wie z. B. Dioxan gut löslich war. Die Umsetzung der Reaktion erfolgte zu etwa 85 %. Mit Hilfe der NMR-Spektroskopie wurde die Struktur der entsprechenden alpha-alpha-Strich-But-2-enyl-1,4-omega-hydroxy-dodeca-oxyethylen-Verbindung der oben genannten Kieselsäure nachgewiesen ($^{13}C$-NMR : Doppelbindung :$\delta$ >C = C< 141,53; 142,31 ppm).

Beispiel 14

Herstellung eines D4R-Kieselsäurederivates mit Isobuttersäureresten

200 mg (0,2 mMol) des Kieselsäurederivates $[HSi(CH_3)_2]_8Si_8O_{20}$ wurden in 6 ml Toluen gelöst und mit 173 mg (1,73 mM) Methacrylsäuremethylester (Molverhältnis HSi-Gruppen : Vinylgruppen 1 : 1,1) versetzt. Nach Zugaben von Hexachlorplatinsäure (5 . $10^{-5}$ Mol pro Mol Doppelbindung) wurde die Lösung 15 h auf 100 °C erwärmt. Nach dem abdestillieren des Lösungsmittels im Vakuum wird ein ölartiges, in organischen Lösungsmitteln lösliches Produkt erhalten. Das $^{29}Si$-NMR-Spektrum der in $CHCl_3$ gelösten Substanz zeigt zwei Signale gleicher Intensität:
a) $\delta$ = -109,12 ppm (D4R-Kieselsäuregerüst) und b) $\delta$ = 11,95 ppm

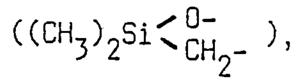

die auf ein vollständig addiertes D4R-Kieselsäurederivat mit Isobuttersäuremethylester-Resten hinweisen. Mit Hilfe der $^1H$-NMR wurden die unterschiedlichen gebundenen Protonen in dem vorher genannten Rest nachgewiesen.

Beispiel 15

Herstellung eines Polymeren aus D4R-Kieselsäureeinheiten

Eine 10 %ige Lösung eines Doppelringkieselsäurederivates der allgemeinen Formel I, worin y = 8 und n = Null, $R^1$, $R^2$, $R^3$ = Methyl und Q = Vinyl ist ($Q_8M_8^{Vi}$) in Toluen (6,88 mM = 8,4 g), wird mit einer 10 %igen Lösung eines Doppelringkieselsäurederivates der Formel I, worin y = 8, n = Null, $R^1$, $R^2$, $R^3$ = Methyl und Q = Wasserstoff ist ($Q_8M_8^H$), in Toluen (6,88 mM = 7 g) gemischt.

Zu dieser Lösung werden 7 . $10^{-4}$ bis 7 . $10^{-5}$ mM Hexachloroplatinsäure pro Mol Doppelbindung, gelöst in Toluen, als Katalysator dazugegeben. Die Mischung wird unter Rühren am Rückfluß unter Feuchtigkeitsausschluß bei Temperaturen zwischen 100 °C bis zur Gelbildung erhitzt und anschließend ca. 10 Stunden bei 110° C gehalten. Das isolierte Gel wird mehrmals mit Toluen gewaschen, um eventuell nicht umgesetzte Ausgangsstoffe zu entfernen. Anschließend wird abgesaugt, und das anhaftende Lösungsmittel im Vakuum (2 . $10^3$ Pa bis 5 . $10^2$ Pa/60 °C) entfernt. Das erhaltene Reaktionsprodukt ist in Wasser und

organischen Lösungsmitteln nicht löslich, zeigt jedoch eine starke Quellung in apolaren Lösungsmitteln (Toluen). Die Ausbeute ist nahezu 100 %ig. Das $^{29}$Si-NMR-Festkörperspektrum zeigt 4 Signale:
a) $\delta$ = -108,2 ppm (D4R-Kieselsäuregerüst); b) $\delta$ = -2,3 ppm ($H(CH_2)_2Si$-);
c) $\delta$ = -0,5 ppm ($CH_2=CH(CH_3)_2Si$-); d) $\delta$ = 13,2 ppm

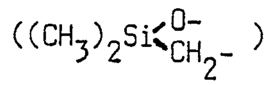

Die quantitative Auswertung des Spektrums ergibt, daß von den acht Reaktionsstellen des D4R durchschnittlich 5,5 eine Additionsreaktion mit anderen D4R-Molekülen unter Bildung eines hochvernetzten Gels eingegangen sind. Das Produkt kann z. B. als Absorptionsmittel eingesetzt werden.

Beispiel 16

Herstellung eines Polymeren aus D4R-Kieselsäureeinheiten

Eine 10 %ige Lösung von $Q_8M_8^V$ in Toluen (6,88 mM = 8,4 g) wird mit einer 10 %igen Lösung von $Q_8M_8^H$ in Toluen (3,44 mM = 3,5 g) gemischt. Zu dieser Lösung werden 7 . $10^{-4}$ bis 7 . $10^{-5}$ mM Hexachloroplatinsäure pro Mol Doppelbindung, gelöst in Toluen, als Katalysator gegeben. Die Mischung wird unter Rühren am Rückfluß unter Feuchtigkeitsausschluß ca. 7 Stunden bei Temperaturen zwischen 100 und 110 °C gehalten. Das Lösungsmittel wird im Vakuum (2 . $10^3$ Pa/60 °C) abdestilliert und das Reaktionsprodukt bei 5 . $10^2$ Pa/60 °C) getrocknet. Die erhaltene Substanz ist in organischen Lösungsmitteln wie z. B. Toluen, Heptan und Aceton löslich. Das Produkt kann z. B. als Beschichtungsmaterial eingesetzt werden. Das $^{29}$Si-NMR-Spektrum der in $CHCl_3$ gelösten Substanz zeigt drei Signale
a) $\delta$ = -109,82 ppm (D4R-Kieselsäuregerüst); b) $\delta$ = -0,24 ppm ($CH_2=CH(CH_3)_2Si$-);
c) $\delta$ = 12,29 ppm

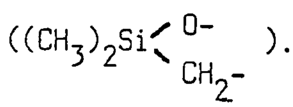

Die Abwesenheit des Signals der $H(CH_3)_2Si$-Gruppen ( $\delta$ = ca. 1,8 ppm) weist auf einen vollständigen Umsatz hin.

Beispiel 17

Herstellung eines Polymers aus D4R-Kieselsäureeinheiten

Zu einer 10 %igen Lösung von $Q_8M_8^H$ (830 mg = 0,82 mM) und $Q_8M_8^V$(800 mg = 0,65 mM) Molverhältnis $Q_8M_8^H$ : $Q_8M_8^V$ = 2 : 1,6) in Toluen werden 4 . $10^{-5}$ M Hexachloroplatinsäure pro Mol Doppelbindung als Katalysator gegeben. Die Mischung wird anschließend 6 h auf 110 °C unter Rühren erhitzt. Das erhaltene Gel wird zwecks Reinigung zweimal mit Toluen gewaschen. Die Trocknung erfolgt im Vakuum (5 . $10^2$ Pa) bei 70 °C.

Das $^{29}$Si-NMR-Festkörper-Spektrum zeigt folgende Signale:
a) $\delta$ = ppm (D4R-Kieselsäuregerüst); b) $\delta$ = ppm ($H(CH_3)_2Si$-),
c) $\delta$ = ppm ($CH_2=CH(CH_3)_2Si$-), d) $\delta$ =

ppm 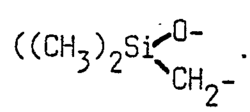

Das Intensitätsverhältnis der Signale b und c zum Signal d beträgt

Beispiel 18

Herstellung eines Polymers aus D4R-Kieselsäureeinheiten und Octyldimethylsilylresten

0,5 g des nach Beispiel 3 hergestellten polymeren Kieselsäurederivats mit funktionellen $H(CH_3)_2Si$-Gruppen wurden mit 5 ml einer Toluenlösung an Octen-1 (0,789 g = 7,04 mM) und Hexachloroplatinsäure (4 . $10^{-5}$ M pro Mol Doppelbindung) versetzt und 6 h bei 110 °C unter Rühren erhitzt. Das erhaltene Reaktionsprodukt wird zweimal mit Toluen gewaschen, um überschüssiges Octen-1 zu entfernen. Die Trocknung erfolgt im Vakuum (5 . $10^2$ Pa) bei 70 °C. Aus dem $^{29}Si$-NMR-Festkörper-Spektrum des Reaktionsprodukts ist zu entnehmen, daß im Vergleich zu der nach Beispiel 3 hergestellten Probe durch die Octen-1 Addition der Anteil an funktionellen $H(CH_3)_2Si$-Gruppen verkleinert wurde. Das Intensitätsverhältnis der Signale b + c/d beträgt

Beispiel 19

Herstellung eines Polymerisats aus $Q_8M_8^V$

0,5 g $Q_8M_8^V$ wurden unter Ausschluß von Luftsauerstoff in 15 ml $CHCl_3$ unter Zugabe des Photoinitiators Benzoinispropylether (2 . $10^{-2}$ M) gelöst. Nach 3 stündiger Bestrahlung der Lösung mit einem Licht der Wellenlänge $\lambda$ = 365 nm wurde das Lösungsmittel entfernt und in dem festen Reaktionsprodukt jodometrisch der Doppelbindungsanteil ermittelt. Die Abnahme des Doppelbindungsanteil auf 62 % weist auf eine partielle Polymerisation der Vinylgruppen des $Q_8M_8^V$ hin. Das $^{29}Si$-NMR-Spektrum der in $CHCl_3$ gelösten Substanz zeigt die folgenden Signale:

**Ansprüche**

1. Organophile Doppelringkieselsäurederivate mit käfigartigen Strukturen der allgemeinen Formel I

$Si_yO_{2,5y}(SiR^1,R^2,R^3)_n(SiR^1R^2Q)_{y-n}$ (I)

worin

y die ganze Zahl 6, 8 oder 10 bedeutet;

n eine ganze Zahl von Null bis (y - 1) bedeutet;

$R^1$, $R^2$, $R^3$ jeweils Phenyl oder ein geradkettiger oder verzweigter Alkylrest mit 1 bis 5 Kohlenstoffatomen darstellt, die gleich oder voneinander verschieden sein können;

Q Wasserstoff; Hydroxy; der Rest eines primären Alkohols; Halogen; Halogenalkyl; Halogenphenyl; Ethylphenyl; ein aliphatischer geradkettiger oder verzweigter $C_2$-$C_{20}$-Alkyl-oder $C_2$-$C_8$-Alkenylrest, der gegebenenfalls substituiert sein kann; ein Epoxyrest, der über eine Ethergruppe gebunden sein kann; ein Silylalkyl- oder Siloxanylalkylrest oder ein Phenylmethylsilylalkylrest; ein Phenylrest, der gegebenenfalls durch Alkenyl oder primäres oder sekundäres Amin substituiert sein kann; ein Carbonsäurerest oder ein Rest eines Carbonsäurederivates darstellt oder ein $C_2$-$C_4$-Alkylcyclohexenrest.

2. Doppelringkieselsäurederivate nach Anspruch 1, dadurch gekennzeichnet, daß $R^1$, $R^2$, $R^3$, y und n die angegebene Bedeutung haben und Q ist Wasserstoff, ein Vinyl-, Allyl-, Halogenalkyl- oder Halogenphenylrest.

3. Doppelringkieselsäurederivate nach Anspruch 1, dadurch gekennzeichnet, daß Q aus der Gruppe ausgewählt wird, bestehend aus Fluor, Chlor, Brom und Jod, insbesondere Chlor und Brom; gesättigtes geradkettiges $C_2$-$C_{18}$-Alkyl, insbesondere Ethyl, Propyl, Butyl, Octyl oder Octadecyl; $C_2$-$C_4$-Alkenyl, das durch Alkylhalogen oder Hydroxy ein- oder mehrfach substituiert sein kann; Alkenyl der Formel (VI a)

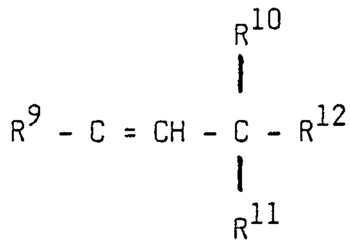

(VI a)

worin

$R^9$ Wasserstoff, $C_1$-$C_3$-Alkyl, vorzugsweise Methyl ist; Cyclohexyl; Phenyl; $-CH_2OH$; $-CH_2Hal$, wobei Hal vorzugsweise Chlor ist oder $-CR^{13}R^{14}OH$, worin $R^{13}$ und $R^{14}$ $C_1$-$C_3$-Alkyl, vorzugsweise Methyl, oder Wasserstoff sein können; bedeutet;

$R^{10}$ und $R^{11}$ sind gleich oder verschieden und stellen $C_1$-$C_3$-Alkyl, vorzugsweise Methyl, oder Wasserstoff dar;

und $R^{12}$ ist Hal, OH oder $-O(CH_2CH_2O)_nH$, mit der Maßgabe, daß, wenn $R^{12}$ - $O(CH_2CH_2O)_nH$ ist dann $R^9$ die Bedeutung $-CR^1R^2OH$ hat, wobei n eine ganze Zahl von 1 bis 40 sein kann, vorzugsweise 5 bis 15;

oder Q ist ein Rest der Formel

$OH\text{-}CH_2C = CH\text{-}CH_2\text{-}O(CH_2CH_2O)_{5\ \mathrm{bis}\ 15}H$; oder Q ist ein Rest der Formel

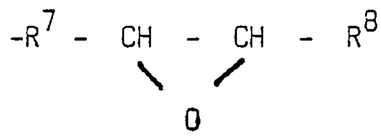

worin

$R^7$ geradkettiger $C_2$-$C_5$-Alkylrest ist, der gegebenenfalls eine Etherbindung aufweist, und $R^8$ ist Wasserstoff oder $C_1$-$C_3$-Alkyl, wobei ein bevorzugter Rest der Glycidoxypropylrest ist; oder Q ist ein Carbonsäurerest, insbesondere Propionsäure- oder iso-Buttersäurerest oder deren Ester oder Amide.

4. Doppelringkieselsäurederivate nach Anspruch 1, dadurch gekennzeichnet, daß der Silylalkylrest ein Triethyl- oder Triethoxysilylrest ist und der Siloxanylalkylrest Heptamethyltrisiloxanyl ist oder ein entsprechender Siloxanylrest der allgemeinen Formel (VII a)

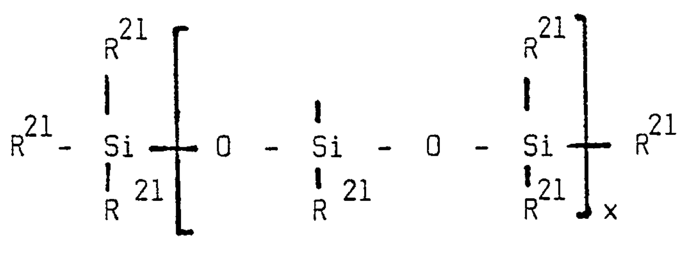

(VII a)

ist, mit x = 2 bis 50 und $R^{21}$ = Methyl und/oder Phenyl.

5. Doppelringkieselsäurederivate nach Anspruch 1 bis 4, dadurch gekennzeichnet, daß y die Zahl 8 ist,; und n = 0 bis 6, vorzugsweise 2 bis 5 ist; und zwei bis 5 Q-Reste Alkyl sind.

6. Verfahren zur Herstellung von organophilen Doppelringkieselsäurederivaten mit käfigartigen Strukturen der allgemeinen Formel I

$Si_yO_{2,5\,y}(SiR^1R^2R^3)_n(SiR^1R^2Q)_{y-n}$ (I)

worin

y die ganze Zahl 6, 8 oder 10 bedeutet;

n eine Zahl von Null bis (y - 1) bedeutet;

$R^1$,$R^2$,$R^3$ die gleich oder verschieden sein können und jeweils geradkettiges oder verzweigtes Alkyl mit 1 bis 5 Kohlenstoffatomen oder Phenyl darstellen;

Q Wasserstoff; Hydroxy; der Rest eines primären Alkanols; Halogen; Halogenalkyl; Halogenphenyl; Ethylphenyl; ein aliphatischer geradkettiger oder verzweigter $C_2$-$C_{20}$-Alkyl- oder $C_2$-$C_8$- Alkenylrest, der gegebenenfalls substituiert sein kann; ein Phenylrest; der gegebenenfalls durch Alkenyl oder primäres oder

sekundäres Amin substituiert sein kann; ein Epoxyrest, der über eine Ethergruppe gebunden sein kann; ein Silylalkyl- oder Siloxanylalkylrest oder Silylphenylalkylrest; ein Carbonsäurerest oder ein Rest eines Carbonsäurederivates darstellt oder ein $C_2$-$C_4$-Alkylcyclohexenrest, dadurch gekennzeichnet, daß man

a) zur Herstellung von Verbindungen, in deren Q Wasserstoff, Vinyl, Allyl, Halogenalkyl oder Halogenphenyl ist, ein käfigartiges Doppelringsilicat oder dessen Lösung oder eine Lösung einer käfigartigen Doppelringkieselsäure, jeweils im Molekül sechs, acht oder 10 Si-Atome und entsprechend 15, 20 oder 25 O-Atome enthaltend, mit einem Disiloxan $(R^{17}R^{18}R^{19}Si_2)O$ oder einem Silan $R^{17}R^{18}R^{19}R^{20}Si$ oder einem Gemisch beider umsetzt, worin $R^{17}$ und $R^{18}$ gleiche oder verschiedene, geradkettige oder verzweigte $C_1$-$C_5$-Alkylreste sind oder $R^{17}$ Phenyl ist; $R^{20}$ ist Halogen, Hydroxy, Alkoxy oder RCOO-, worin R ein $C_1$-$C_3$-Alkylrest ist, und $R^{19}$ ist Wasserstoff, Vinyl, Allyl, Halogenalkyl oder Halogenphenyl; oder die obige Umsetzung unter Zusatz eines Silanes $(R)_3SiR^4$ und/oder eines Hexaalkyldisiloxanes $(R_3Si)_2O$ durchführt, worin R und $R^{20}$ die oben genannte Bedeutung haben;

b) zur Herstellung von Verbindungen, in denen Q Halogen oder Hydroxy ist eine Verbindung der allgemeinen Formel (II),

$Si_yO_{2,5\,y}(SiR^1R^2R^3)_n(SiR^1R^2H)_{y-n}$ (II)

worin $R^1$, $R^2$, $R^3$, y und n die oben genannte Bedeutung haben, mit einem Halogenierungsmittel halogeniert und anschließend die halogenierte Verbindung hydrolysiert; oder

c) zur Herstellung von Verbindungen, in denen Q ein Epoxyrest ist, der gegebenenfalls über eine Ethergruppe gebunden sein kann, eine Verbindung der allgemeinen Formel II, worin $R^1$, $R^2$, $R^3$, y und n die oben genannte Bedeutung haben, durch Addition mit einer Verbindung der allgemeinen Formel VI

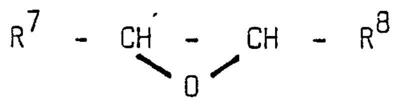

(VI)

worin $R^7$ ein geradkettiger oder verzweigter Alkenylrest mit 2 bis 5 Kohlenstoffatomen ist, der gegebenenfalls eine Etherbindung aufweist, und $R^8$ Wasserstoff oder ein Alkylrest mit 1 bis 3 Kohlenstoffatomen, ist, umsetzt; oder

d) zur Herstellung von Verbindungen, in denen Q ein aliphatischer geradkettiger oder verzweigter $C_2$-$C_{20}$-Alkyl- oder $C_2$-$C_8$-Alkenylrest mit 2 bis 10 Kohlenstoffatomen ist, der gegebenenfalls substituiert sein kann, eine Verbindung der allgemeinen Formel II,

worin $R^1$, $R^2$, $R^3$, y und n die oben genannte Bedeutung haben, durch Addition mit einer aliphatischen geradkettigen oder verzweigten $C_2$-$C_{20}$-Alkenyl- oder $C_2$-$C_8$-Alkinylverbindung, die gegebenenfalls substituiert sein kann, umsetzt; oder

e) zur Herstellung von Verbindungen, in denen Q ein Carbonsäurerest oder der Rest eines Carbonsäurederivates ist, eine Verbindung der allgemeinen Formel II, worin $R^1$, $R^2$, $R^3$, y und n die oben genannte Bedeutung haben, mit einer ungesättigten Säure oder einem ungesättigten Säurederivat umsetzt; oder

f) zur Herstellung einer Verbindung, in der Q Ethylphenyl oder $C_2$-$C_4$-Alkylcyclohexenyl bedeutet, eine Verbindung der allgemeinen Formel II, worin $R^1$, $R^2$, $R^3$, y und n die oben genannte Bedeutung haben, mit Styren bzw. einem $C_2$-$C_4$-Alkylcyclohexen umsetzt; oder

g) zur Herstellung von Verbindungen, in denen Q ein Silylalkyl- oder Siloxanylalkylrest oder ein Silylphenylalkylrest ist,

eine Verbindung der allgmeinen Formel III

$Si_yO_{2,5\,y}(SiR^1R^2R^3)_n(SiR^1R^2R^4)_{y-n}$ (III)

worin $R^1$, $R^2$, $R^3$, y und n die oben genannte Bedeutung haben und $R^4$ Vinyl oder Allyl ist, durch Addition mit einem Trialkylsilan der allgemeinen Formel

$(R^{23})_3SiH$

umsetzt, worin $R^{23}$ ein geradkettiger oder verzweigter Alkylrest sein kann mit 1 bis 5 C-Atomen; oder mit einem Alkylphenylsilan der allgemeinen Formel

$(CH_3)_{3-p}(R^{14})_pSiH$,

worin $R^{14}$ ein Phenyl- oder substituierter Phenylrest ist, wobei als Substituent beispielsweise Alkyl, Halogen, Hydroxy, Amin, Alkoxy aber auch andere Gruppen vorhanden sein können, und p gleich eins oder zwei ist, umsetzt;

oder

mit einem Trialkoxysilan der allgemeinen Formel

$(R^{15}O)_3SiH$,

worin $R^{15}$ gleich oder verschieden sein kann und Methyl, Ethyl oder Propyl bedeutet umsetzt; oder

mit einem gemischten Alkyl/Phenyl/Alkoxysilan der allgemeinen Formel
$(R^{16})_{3-p}(R^{15}O)_pSiH$,
worin $R^{16}$ gleich oder verschieden sein kann und Alkyl oder Phenyl bedeutet, $R^{15}$ gleich oder verschieden sein kann und die genannte Bedeutung hat und p ebenfalls die genannte Bedeutung hat, umsetzt; oder mit einem oligomeren oder polymeren SiH-Gruppen enthaltenden Siloxan der allgemeinen Formel VII

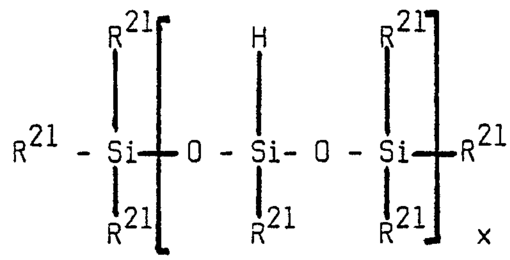

(VII)

worin $R^{21}$ Methyl und/oder Phenyl und x eine Zahl von 1 - 50 ist, umsetzen; oder mit Tris-Trimethylsiloxysilan umsetzt; oder
h) zur Herstellung von Verbindungen, in denen Q ein durch Alkenyl oder primäres oder sekundäres Amin substituierter Phenylrest ist,
eine Verbindung der allgemeinen Formel (VIII)
$Si_yO_{2,5\,y}(SiR^1R^2R^3)_n(SiR^1R^2A)_{y-n}$ (VIII)
worin $R^1$, $R^2$, $R^3$, y und n die oben genannte Bedeutung haben und A Halogenphenyl ist, entweder mit einem primären oder sekundären Amin oder mit einer grignardierten Alkenylverbindung umsetzt; oder
i) zur Herstellung von Verbindungen, in denen Q ein Rest eines primären Alkanols ist, eine Verbindung der allgemeinen Formel (VIII), worin $R^1$, $R^2$, $R^3$, y, n und A die oben genannte Bedeutung haben, mit einem Grignard-Reagenz in Anwesenheit von Sauerstoff umsetzt.

7. Verfahren nach Anspruch 6, dadurch gekennzeichnet, daß n = 0 bis 4 bei y = 6 ist, n = 0 bis 6 bei y = 8; und n = 0 bis 8 bei y = 10, wobei y vorzugsweise 8 ist.

8. Verfahren nach Anspruch 6 oder 7, dadurch gekennzeichnet, daß $R^1$, $R^2$ und $R^3$ Methyl, Ethyl, Propyl, Isopropyl und/oder Phenyl darstellen, vorzugsweise Methyl, Ethyl und/oder Phenyl.

9. Verfahren nach einem der Ansprüche 6 bis 8, dadurch gekennzeichnet, daß man zur Herstellung von Verbindungen, in denen Q Wasserstoff, Vinyl, Allyl, Halogenalkyl oder Halogenphenyl ist, ein käfigartiges Doppelringsilicat oder dessen Lösung oder eine Lösung einer käfigartigen Doppelringkieselsäure mit acht Si-Atomen und 20 Sauerstoffatomen mit einem Disiloxan $(R^{17}R^{18}R^{19}Si_2)O$ oder einem Silan $R^{17}R^{18}R^{19}R^{20}Si$ oder einem Gemisch beider umsetzt, worin $R^{17}$ und $R^{18}$ gleiche oder verschiedene, geradkettige oder verzweigte $C_1$-$C_3$-Alkylreste sind oder $R^{17}$ Phenyl ist, $R^{20}$ ist Halogen, Hydroxy, Alkoxy oder RCOO-, worin R ein $C_1$-$C_3$-Alkylrest ist, und $R^{18}$ ist Wasserstoff, Vinyl, Allyl, Halogenalkyl oder Halogenphenyl; oder die obige Umsetzung unter Zusatz eines Silanes $(R)_3SiR^{20}$ und/oder eines Hexaalkyldisiloxanes $(R_3Si)_2O$, worin R und $R^{20}$ die oben genannte Bedeutung haben.

10. Polymerisate aus käfigartig aufgebauten Doppelringkieselsäurederivaten der allgemeinen Formel I
$Si_yO_{2,5\,y}(SiR^1R^2R^3)_n(SiR^1R^2Q)_{y-n}$ (I)
worin
y die ganze Zahl 6, 8 oder 10 bedeutet;
n eine ganze Zahl von Null bis (y - 1) bedeutet;
$R^1$, $R^2$, $R^3$ jeweils ein geradkettiger oder verzweigter Alkylrest mit 1 bis 5 Kohlenstoffatomen darstellt, der gleich oder voneinander verschieden sein kann; oder Phenyl ist
Q Wasserstoff, Hydroxy, Vinyl, Allyl, Epoxy, Halogenalkyl, Halogenphenyl, ein Carbonsäure- bzw. Carbonsäureesterrest oder der Rest eines primären Alkanols ist,
wenn Q Wasserstoff ist,
mit einer monomeren, mehrfach ungesättigten Verbindung mit olefinischen Doppelbindungen oder mit einer Verbindung der Formel I, worin y, n, $R^1$, $R^2$, $R^3$ die genannte Bedeutung haben und Q Vinyl oder Allyl ist, oder mit oligomeren oder polymeren Organosiloxanolen;
wenn Q Hydroxy ist,
mit einem Siloxandiol oder einer Verbindung der Formel I, worin y, n, $R^1$, $R^2$, $R^3$ die genannte Bedeutung haben, und Q Hydroxy oder Wasserstoff ist;
oder
wenn Q ein Epoxyrest ist,
mit einem Polyglykol, einem phenolgruppenenthaltenden Polymeren oder einer Verbindung der Formel I,

worin y, n, $R^1$, $R^2$, $R^3$ die genannte Bedeutung haben, und Q Epoxy ist; oder
wenn Q der Rest eines primären Alkanols, mit 1 bis 5 C-Atomen, mit einem Diisocyanat; oder
wenn Q ein Halogenalkyl- oder Halogenphenyl ist, mit einem Grignard-Reagenz aus einer Verbindung der Formel I worin y, n, $R^1$, $R^2$, $R^3$ die genannte Bedeutung haben und Q Halogenalkyl ist; oder
wenn Q Vinyl oder Allyl bedeutet, mit einer monomeren reaktiven Verbindung mit olefinischen Doppelbindungen oder mehrfachfunktionellen Organo-H-Siloxanen oder einer Verbindung der Formel I, worin y, n, $R^1$, $R^2$, $R^3$ die genannte Bedeutung haben, und Q Vinyl, Allyl oder Wasserstoff bedeutet, wobei das Polymerisat mit dem Reaktionspartner Verbindung der Formel I, worin Q = Vinyl, Allyl, H ist, weiterhin niedermolekulare $C_2$-$C_{20}$-Alkylreste, Silan- und/oder Siloxanreste enthalten kann, die durch Nachbehandlung des Polymerisates mit niedermolekularen $C_2$-$C_{20}$-Alken der SiH-gruppenhaltigen Silanen und/oder Siloxanen erhalten wurden.

11. Polymerisate nach Anspruch 10, dadurch gekennzeichnet, daß die monomere reaktive Verbindung Styren oder Methacrylsäure ist; der Epoxyrest ein Glycidoxypropylrest ist; das Polyglykol ein Polyethylenglykol, bestehend aus 5 - 40 wiederkehrenden Struktureinheiten oder ein Polypropylenglykol, bestehend aus 5 - 50 wiederkehrenden Struktureinheiten ist; das Siloxandiol oder das Polysiloxan ein Polydimethylsiloxan-alpha-omega-diol ist; das Organo-H-siloxan ein Siloxan der Formel

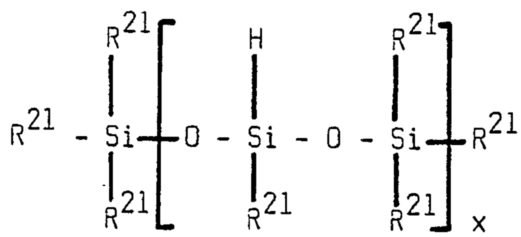

ist, worin $R^{21}$ Methyl und/oder Phenyl und x eine ganze Zahl von 1 - 50 ist, und das mehrfach ungesättigte Monomere aus der aus Butadien, Isopren und Chloropren bestehenden Gruppe ausgewählt ist.

12. Polymerisate nach Anspruch 10 oder 11, dadurch gekennzeichnet, daß $R^1$, $R^2$, $R^3$ Methyl, Ethyl, Propyl, Isopropyl und/oder Phenyl darstellen, vorzugsweise sind $R^1$ und $R^2$ $C_1$-$C_3$-Alkyl und $R^3$ ist Phenyl und insbesondere sind $R^1$, $R^2$ und $R^3$ Methyl.

13. Polymerisate nach einem der Ansprüche 10 bis 12, dadurch gekennzeichnet, daß y = 8 und n = 0 bis 7, vorzugsweise 2 bis 5 ist.